# EUROPEAN PATENT SPECIFICATION

(11) **EP 4 351 103 B1**
(45) Date of publication and mention of the grant of the patent: **25.02.2026**
(21) Application number: 22855160.2
(22) Date of filing: 13.07.2022
(51) Int. Cl.: H04L 65/1016, H04L 65/1033, H04L 65/1104, H04L 65/1069

(54) **CALL PROCESSING METHODS, APPARATUS, AND COMPUTER-READABLE STORAGE MEDIUM**
VERFAHREN, VORRICHTUNG UND COMPUTERLESBARES SPEICHERMEDIUM ZUR ANRUFVERARBEITUNG
PROCÉDÉS DE TRAITEMENT DES APPELS, APPAREIL ET SUPPORT DE STOCKAGE LISIBLE PAR ORDINATEUR

(30) Priority: 13.08.2021 CN 202110929881
(43) Date of publication of application: 10.04.2024
(73) Proprietor: Huawei Technologies Co., Ltd., Shenzhen, Guangdong 518129 (CN)
(72) Inventor: LIN, Hongda, Shenzhen, Guangdong 518129 (CN); HUANG, Kai, Shenzhen, Guangdong 518129 (CN); LI, Tuo, Shenzhen, Guangdong 518129 (CN); OU, Wenjun, Shenzhen, Guangdong 518129 (CN)
(74) Representative: Goddar, Heinz J.
(86) International application number: PCT/CN2022/105394
(87) International publication number: WO 2023/016177

(56) References cited:
- CN-A- 108 353 072
- US-A1- 2018 316 732
- US-A1- 2018 316 732
- US-A1- 2020 204 595
- "3rd Generation Partnership Project; Technical Specification Group Services and System Aspects; 3G security; Lawful interception architecture and functions (Release 14)", 3GPP STANDARD ; TECHNICAL SPECIFICATION ; 3GPP TS 33.107, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V14.2.0, 16 June 2017 (2017-06-16), Mobile Competence Centre ; 650, route des Lucioles ; F-06921 Sophia-Antipolis Cedex ; France , pages 1 - 329, XP051298748

## Description

This application claims priority to Chinese Patent Application No. 202110929881.5, filed with the China National Intellectual Property Administration on August 13, 2021 and entitled "CALL PROCESSING METHOD, APPARATUS, AND SYSTEM".

### TECHNICAL FIELD

This application relates to the field of communication technologies, and in particular, to a call processing apparatus, methods and a computer-readable storage medium.

### BACKGROUND

An IP multimedia subsystem (IP multimedia subsystem, IMS) is a general network architecture that is based on an IP network and that provides multimedia services. An IMS network uses the session initiation protocol (session initiation protocol, SIP) as a main signaling protocol, so that a carrier can provide an end-to-end all-IP multimedia service for a user. The SIP uses the session description protocol (session description protocol, SDP) and an offer/answer (offer/answer, OA for short) mechanism, to complete media negotiation, for example, audio and video codec negotiation, host address negotiation, and network transmission protocol negotiation, among participants in a session.

Currently, the IMS network includes the following media processing network elements: an IMS access media gateway (IMS access media gateway, IMS-AGW), a multimedia resource function processor (multimedia resource function processor, MRFP), a transition gateway (transition gateway, TrGW), and an IP multimedia media gateway (IP multimedia media gateway, IM-MGW). In an IMS network architecture, the foregoing media processing network elements can be directly controlled only by specific media control network elements. For example, the IMS-AGW is controlled by a proxy call session control function (proxy call session control function, P-CSCF) network element. The media control network element completes media negotiation with another network element or terminal device by using SIP signaling and the SDP protocol, and then controls the media processing network element to complete actual media processing and media data transmission. A basic call procedure and a media negotiation procedure of the IMS are implemented through interaction between a calling side and a called side. Because the IMS is a half-call model, regardless of whether the calling side and the called side access the IMS network by using the IMS-AGW, logically, the calling side and the called side each have one IMS-AGW, and two media contexts need to be established. This causes multi-hop media forwarding (where for example, real-time transport protocol (real-time transport protocol, RTP) media are forwarded twice) and resource waste. In addition, media processing capabilities provided by different media processing network elements in the IMS network are limited, and processing services of different media types may need to use a plurality of media processing network elements. This causes a media detour, and cannot meet a low delay demand of a future strong interactive service, for example, an extended reality (extended reality, XR).

Therefore, in the IMS half-call model, how to avoid the multi-hop media forwarding to reduce a service processing delay becomes a problem to be resolved.

US 2018/316732 A1 discloses: Enhanced media plane optimization in web real time communication scenarios There are provided measures for enhanced media plane optimization in web real time communication scenarios. Such measures exemplarily comprise receiving a first session description message comprising at least one media line indicative of multiple media streams transportable in a same stream control association, and generating, based on said first session description message, a second session description message indicative of a possibility for a separate transport of said multiple media streams and of a possibility for a joint transport of at least some media streams of said multiple media streams in the same stream control association.

### SUMMARY

The invention relates to a method performed by a unified media function network element, as further defined in claim 1, a method performed by an access media control network element, as further defined in claim 8, an apparatus, as further defined in claim 11, a computer-readable storage medium, as further defined in claim 12, and a method performed by a system, as further defined in claim 13, for reducing media detours and media transmission delays.

### BRIEF DESCRIPTION OF DRAWINGS

FIG. 1 is a schematic diagram of an IMS network architecture;
FIG. 2 is a schematic diagram of a network architecture according to an embodiment of this application;
FIG. 3 is a schematic flowchart of a basic call and media negotiation of an IMS;
FIG. 4 is a schematic diagram of a media connection topology after a basic call procedure and a media negotiation procedure of an IMS are completed;
FIG. 5A and FIG. 5B are a schematic flowchart of an IMS announcement;
FIG. 6 is a schematic flowchart of IMS call forwarding;
FIG. 7 is a schematic diagram of a media collision;
FIG. 8 is a schematic diagram of a media resource model defined in an H.248 protocol;
FIG. 9 is a schematic flowchart of a call processing method according to an embodiment of this application;
FIG. 10 is a schematic diagram of a session media processing context according to an embodiment of this application;
FIG. 11 is a schematic flowchart of implementing media redirection according to a call processing method after a basic call processing procedure is performed according to an embodiment of this application;
FIG. 12 is a schematic flowchart of applying a call processing method to an interconnection scenario according to an embodiment of this application;
FIG. 13 is a schematic flowchart of applying a call processing method to a scenario of setting up a basic audio call of a calling party and a called party according to an embodiment of this application;
FIG. 14 is a schematic diagram of a media connection topology of an audio call according to an embodiment of this application;
FIG. 15 is a schematic diagram of a media connection topology of a video call according to an embodiment of this application;
FIG. 16A and FIG. 16B are a schematic flowchart of applying a call processing method to an announcement service scenario according to an embodiment of this application;
FIG. 17 is a schematic diagram of a media connection topology of a video ring back tone announcement according to an embodiment of this application;
FIG. 18A and FIG. 18B are a schematic flowchart of applying a call processing method to a call forwarding service scenario according to an embodiment of this application;
FIG. 19 is a schematic diagram of a media connection topology of a call forwarding service according to an embodiment of this application;
FIG. 20 is a schematic diagram of a call processing apparatus according to an embodiment of this application;
FIG. 21 is a schematic diagram of another call processing apparatus according to an embodiment of this application;
FIG. 22 is a schematic diagram of another call processing apparatus according to an embodiment of this application;
FIG. 23 is a schematic diagram of another call processing apparatus according to an embodiment of this application;
FIG. 24 is a schematic diagram of another call processing apparatus according to an embodiment of this application; and
FIG. 25 is a schematic diagram of another call processing apparatus according to an embodiment of this application.

### DESCRIPTION OF EMBODIMENTS

In embodiments of this application, the word "example", "for example", or the like is used to represent giving an example, an illustration, or a description. In embodiments of this application, any embodiment or design scheme described as the "example" or "for example" should not be explained as being more preferred or having more advantages than another embodiment or design scheme. Exactly, use of the word "example", "for example", or the like is intended to present a related concept in a specific manner.

The terms "first", "second", and the like in embodiments of this application are merely intended for a purpose of description, and cannot be understood as an indication or implication of relative importance or implicit indication of a quantity of indicated technical features. Therefore, a feature limited by the "second" or "first" may explicitly or implicitly include one or more features.

It can be understood that the terms used in the descriptions of various examples in this specification are merely intended to describe specific examples, but are not intended to constitute a limitation. "One" ("a" or "an") and "the" of singular forms used in the descriptions of the various examples and the appended claims are also intended to include plural forms, unless otherwise specified in the context clearly.

It can be further understood that sequence numbers of processes do not mean execution sequences in embodiments of this application. The execution sequences of the processes need to be determined based on functions and internal logic of the processes, and should not constitute any limitation on the implementation processes of embodiments of this application.

It can be further understood that determining B based on A does not mean that B is determined based only on A. B may alternatively be determined based on A and/or another piece of information.

It can be further understood that the term "include" (which is also referred to as "includes", "including", "comprises", and/or "comprising"), when being used in this specification, specifies presence of stated features, integers, steps, operations, elements, and/or components, but does not preclude presence or addition of one or more other features, integers, steps, operations, elements, components, and/or groups thereof.

The following describes the technical solutions in embodiments of this application with reference to the accompanying drawings in embodiments of this application.

An IP multimedia subsystem (IP multimedia subsystem, IMS) is a general network architecture that is based on an IP network and that provides multimedia services. An IMS network uses a session initiation protocol (session initiation protocol, SIP) as a main signaling protocol, so that a carrier can provide an end-to-end all-IP multimedia service for a user. The SIP uses the session description protocol (session description protocol, SDP) and an offer/answer (offer/answer, OA) mechanism, to complete media negotiation, for example, audio and video codec negotiation, host address negotiation, and network transmission protocol negotiation, among participants in a session.

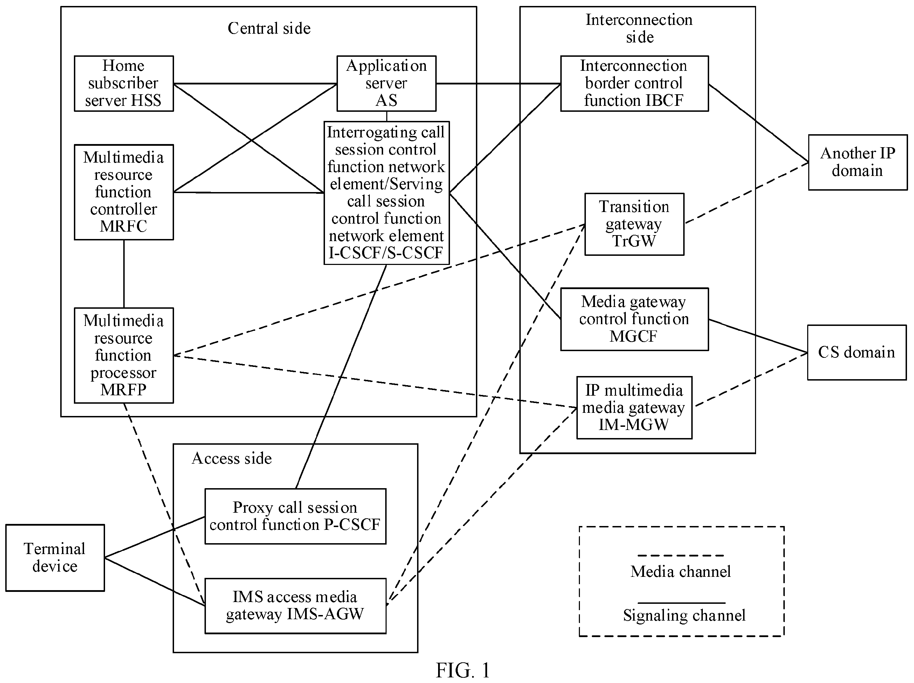

FIG. 1 is a schematic diagram of an IMS network architecture. The IMS network architecture may be divided into an access side, a central side, and an interconnection side. For ease of description, FIG. 1 shows network elements related only to media processing in an IMS network. In the IMS network architecture, a media processing network element can be directly controlled only by a specific media control network element. For example, a media control network element completes media negotiation with another network element or terminal device by using SIP signaling and the SDP protocol, and then controls the media processing network element, to implement actual media processing and media data transmission. An H.248 gateway control protocol is usually used between the media control network element and the media processing network element, to implement management of a media processing node and a connection relationship thereof.

The terminal device in embodiments of this application may also be referred to as a terminal, and may be a device having a wireless transceiver function. The terminal device may be deployed on land, including an indoor device, an outdoor device, a handheld device, or a vehicle-mounted device; may be deployed on the surface of water (for example, in a steamship); or may be deployed in the air (for example, on an airplane, a balloon, or a satellite). The terminal device may be user equipment (user equipment, UE). The UE includes the handheld device, the vehicle-mounted device, a wearable device, or a computing device that have a wireless communication function. For example, the UE may be a mobile phone (mobile phone), a tablet computer, or a computer that has the wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. In embodiments of this application, an apparatus configured to implement a function of the terminal may be the terminal, or may be an apparatus, for example, a chip system, that can support the terminal in implementing this function. The apparatus may be installed in the terminal. In embodiments of this application, the chip system may include a chip, or may include a chip and another discrete component. In the technical solutions provided in embodiments of this application, the technical solutions provided in embodiments of this application are described by using an example in which the apparatus configured to implement the function of the terminal is the terminal.

The access side includes an IMS-access media gateway (IMS access media gateway, IMS-AGW), a proxy-call session control function (proxy call session control function, P-CSCF) network element, and the like. The IMS-AGW is a media processing network element on the access side, and is configured to implement functions of the terminal device, for example, media access proxy and forwarding, network address translation (network address translation, NAT) traversal, and audio codec conversion. The P-CSCF is used for controlling the IMS-AGW, to implement media processing of the access side.

The central side includes a multimedia resource function processor (multimedia resource function processor, MRFP), a multimedia resource function controller (multimedia resource function controller, MRFC), a home subscriber server (home subscriber server, HSS), an application server (application server, AS), an interrogating-call session control function (interrogating CSCF, I-CSCF) network element, a serving-call session control function (serving CSCF, S-CSCF) network element, and the like. The MRFP is a media processing network element on the central side, and is configured to provide functions, for example, announcement playing, digit collection, and voice conference. The MRFC is configured to control the MRFP, to implement the functions, for example, the announcement playing, the digit collection, and the voice conference.

The interconnection side includes an interconnection border control function (interconnection border control function, IBCF) network element, a transition gateway (transition gateway, TrGW), an IP multimedia media gateway (IP multimedia media gateway, IM-MGW), and a media gateway control function (media gateway control function, MGCF) network element, and the like. The TrGW and the IM-MGW are media processing network elements on the interconnection side, and are configured to implement media interconnection between the IMS network and another network. For example, the TrGW is configured to implement interconnection between the IMS network and a media plane of another IP network, including media NAT, quality of service (quality of service, QoS) control, codec conversion, and the like. The IM-MGW is configured to implement interconnection between the IMS network and another non-IP network (for example, a public switched telephone network (public switched telephone network, PSTN), and a public land mobile network (public land mobile network, PLMN)). The IBCF is used for controlling the TrGW, to implement media interconnection control with another IP domain. The MGCF is used for controlling the IM-MGW, to implement media interconnection control with another non-IP domain.

A basic call procedure and a media negotiation procedure in the IMS network are implemented through interaction between a calling side and a called side. In an aspect, because an IMS is a half-call model, regardless of whether a calling terminal device and a called terminal device access the IMS network by using the IMS-AGW, logically, the calling side and the called side each have one IMS-AGW, and two media contexts need to be established. For example, a calling IMS-AGW creates one media context, and is configured to receive real-time transport protocol (real-time transport protocol, RTP) media from the calling terminal device, and forward the RTP media. A called IMS-AGW creates another media context, and is configured to receive the RTP media forwarded by the calling IMS-AGW, and forward the RTP media to the called terminal device. In other words, when being transmitted to the called terminal device via the IMS network, the RTP media from the calling terminal device need to pass through at least two hops. In other words, this causes multi-hop media forwarding and resource waste.

In another aspect, in an IMS half-call model, media redirection may be triggered on both the calling side and the called side. This causes a media collision. For example, if the calling side triggers an announcement, the called side triggers call forwarding, and before a call is set up, the media redirection is implemented by using an UPDATE message. When the calling side triggers the announcement, the called side triggers the call forwarding, the media collision occurs in a system.

In another aspect, media processing capabilities provided by different media processing network elements in the IMS network are limited. Processing services of different media types may need to use a plurality of media processing network elements. For example, a function provided by an IMS access-side media processing network element is limited, and functions, for example, the announcement playing, and video and video conference need to be provided by the media processing network element on the central side. This causes a media detour and a long service delay, and cannot meet a low delay requirement of a future strong interactive service, for example, an extended reality (extended reality, XR).

In another aspect, with increasing media-related services provided by the IMS, a plurality of ASs need to be connected in series to provide different services. For example, a multimedia telephony application server (IMS multimedia telephony application server, MMTEL AS) is configured to provide a conventional telecommunication service. A video ring back tone AS is configured to provide a video ring back tone service. However, when the MMTEL AS and the video ring back tone AS are connected in series, media resources cannot be shared by the plurality of ASs. Each AS needs to apply for independent media resources. This causes the media resource waste, a service conflict, and the media collision.

Therefore, in the IMS half-call model, how to avoid the multi-hop media forwarding to reduce a service processing delay and avoid the service conflict and the media collision becomes a problem to be resolved.

To resolve the problem, an embodiment of this application provides a call processing method. The call processing method is based on the IMS network architecture and is performed by a newly added unified media function (unified media function, UMF) network element. The UMF provides a media access capability by using an access side, to reduce the media detour, reduce a media service transmission delay, and facilitate supporting a requirement of a delay-sensitive service, for example, the extended reality, for the IMS network architecture.

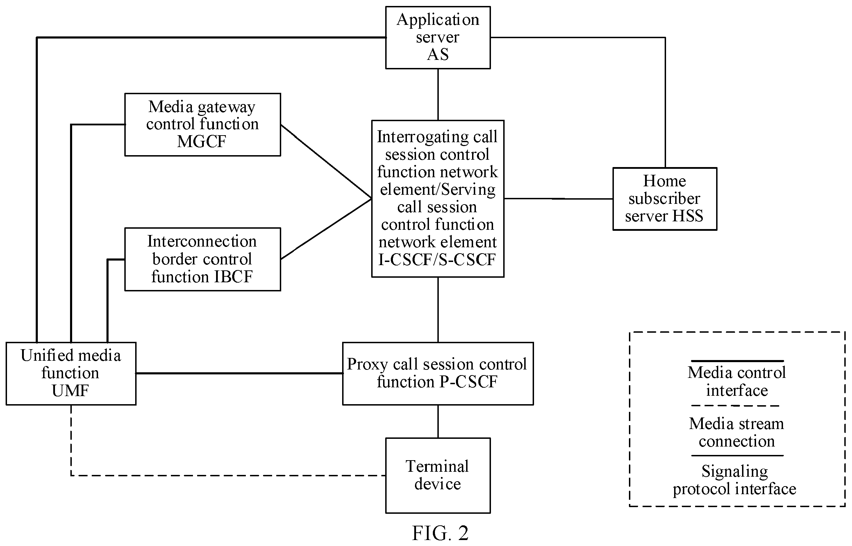

The call processing method provided in this embodiment of this application is applied to a network architecture shown in FIG. 2. The network architecture shown in FIG. 2 includes the newly added UMF in this embodiment of this application. In terms of functions, in addition to integrating media processing network elements in the current IMS network architecture, for example, the IMS-AGW, the MRFP, and the TrGW, the UMF may further provide a media processing function needed by a future new service, for example, a data channel service (data channel service). The UMF may be simultaneously deployed on an access side, a central side, or an interconnection side. All network elements in an IMS trusted domain may control the UMF. The UMF is used to provide rich media processing capabilities, to reduce a media detour and meet a requirement of a future low-delay-sensitive service, for example, an XR. The network architecture shown in FIG. 2 further includes an AS, an MGCF, an IBCF, an I-CSCF, an S-CSCF, a P-CSCF, an HSS, and a terminal device. Each network element or device has a function that is similar to a function of a corresponding network element or device in an existing IMS network, and further supports evolution of a future media capability. For example, in this embodiment of this application media function control (for example, when the P-CSCF controls the UMF to set up a basic call) uses a non-OA mechanism, to control the UMF by using a media gateway control protocol-like (for example, an H.248 protocol) interface or a service-oriented interface. In this way, media renegotiation is avoided during performing a media service, and an IMS signaling plane (including OA negotiation) is decoupled from a media capability. This facilitates the evolution of the future media capability. It can be noted that the network architecture shown in FIG. 2 focuses on showing the media service, and does not show a network element unrelated to the media service. Usually, a CSCF does not participate in the media service. Therefore, FIG. 2 does not show a control relationship between the CSCF and the UMF. However, this is not limited in this embodiment of this application.

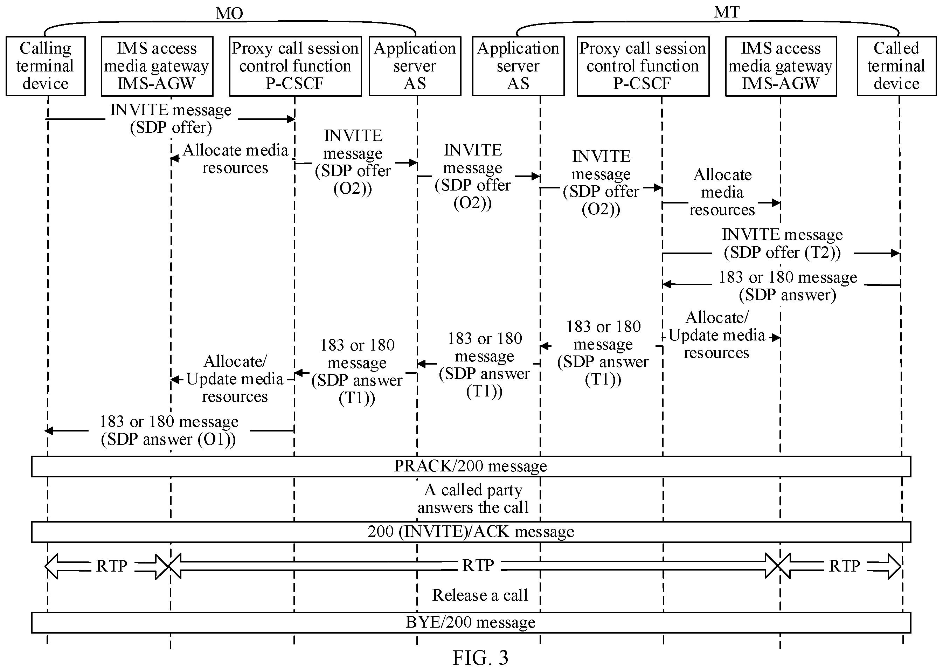

The following describes related concepts in embodiments of this application.
1. IMS basic call and media negotiation: FIG. 3 is a schematic flowchart of the IMS basic call and the media negotiation. A basic call procedure and a media negotiation procedure are implemented through interaction between a terminal device, an IMS-AGW, a P-CSCF, and a CSCF/an AS. It can be noted that because an IMS is a half-call model, regardless of whether a calling party and a called party are accessed via a same physical IMS network, call processing of the calling party and call processing of the called party are implemented respectively by two different logical entities. In other words, logically, uplink (mobile original, MO) in FIG. 3 includes a calling terminal device, a calling IMS-AGW, a calling P-CSCF, and a calling CSCF/AS, and downlink (mobile terminated, MT) includes a called terminal device, a called IMS-AGW, a called P-CSCF, and a called CSCF/AS. The basic call procedure and the media negotiation procedure shown in FIG. 3 include the following steps.
   A. The calling terminal device includes media information (SDP) of the calling terminal device in an initial INVITE message, and the media information is an SDP offer.
   B. The calling P-CSCF receives the INVITE message, and records and stores the media information of the calling terminal device. In addition, the calling P-CSCF indicates the calling IMS-AGW to allocate an output media endpoint O2, and corresponding local media information is SDP (O2). The calling P-CSCF replaces calling media information with SDP (O2) and then transfers SDP (O2) to a subsequent network element by using SIP signaling. For example, the SIP signaling is sent by the calling P-CSCF to the calling CSCF/AS, then sent by the calling CSCF/AS to the called CSCF/AS, and then sent by the called CSCF/AS to the called P-CSCF.
   C. The called P-CSCF receives the INVITE message, and records and stores the calling media information. In addition, the called P-CSCF indicates the called IMS-AGW to allocate an output media endpoint T2, and corresponding local media information is SDP (T2). Then, the called P-CSCF sends SDP (T2) to the called terminal device.
   D. The called terminal device includes media information in a first reliable 1XX (183 or 180) response message, and the media information is an SDP answer.
   E. The called P-CSCF receives the 1XX response message, and updates remote media information of T2 to the media information of the called terminal device. In addition, the called P-CSCF indicates the called IMS-AGW to allocate an input media endpoint T1, corresponding local media information is SDP (T1), and corresponding remote media information is the calling media information SDP (O2) previously stored.
   F. The called P-CSCF indicates the called IMS-AGW to associate T1 with T2, replaces a called SDP with SDP (T1), and transfers SDP (T1) to a subsequent network element by using the SIP signaling. For example, the SIP signaling is sent by the called P-CSCF to the called CSCF/AS, then sent by the called CSCF/AS to the calling CSCF/AS, and then sent by the calling CSCF/AS to the calling P-CSCF. If the called terminal device does not support a reliable 1XX response transmission mechanism defined in a standard protocol RFC3262, the called terminal device may include the SDP answer in a 200 (INVITE) response message.
   G. The calling P-CSCF receives an SDP answer (T1) of a called party and updates the remote media information of O2 to SDP (T1). The calling P-CSCF indicates the calling IMS-AGW to allocate an input media endpoint O1, corresponding local media information is SDP (O1), and corresponding remote media information is the media information of the calling terminal device previously stored.
   H. The calling P-CSCF indicates the calling IMS-AGW to associate O1 with O2, replaces a calling SDP with SDP (O1), and then transfers SDP (O1) to the calling terminal device by using the SIP signaling.

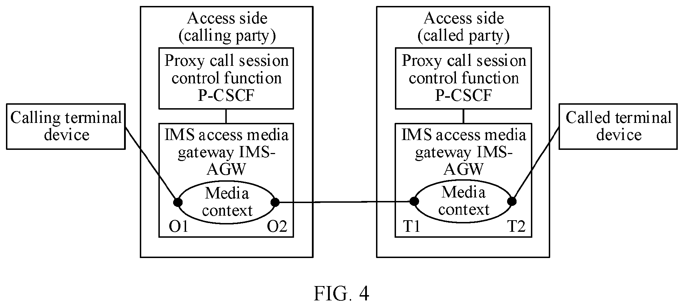

In conclusion, the media negotiation procedure is completed, and the calling terminal device and the called terminal device may transmit RTP media, as shown in FIG. 4. FIG. 4 is a schematic diagram of a media connection topology after a basic call procedure and a media negotiation procedure of an IMS are completed. As shown in FIG. 4, a calling IMS-AGW in an access side (a calling party) creates two media endpoint O1 and O2, and a called IMS-AGW in the access side (a called party) creates two media endpoints T1 and T2. It can be seen that when being transmitted to the called terminal device, media data of the calling terminal device needs to pass through at least two hops.

Optionally, if a calling side does not include media information (a slow start procedure) in an initial INVITE message, media negotiation may be completed in the following two procedures.

Manner 1: A called side includes an SDP offer in a first reliable 18X (183 or 180) response message, and the calling party replies to an SDP answer by using a PRACK message, to complete the media negotiation.

Manner 2: The called party includes an SDP offer in a 200 (INVITE) response message, and the calling party replies to an SDP answer by using an ACK message, to complete the media negotiation.

Optionally, after a call between the calling terminal device and the called terminal device ends, the calling side and the called side perform call release. For a specific implementation, refer to descriptions in an existing protocol standard. Details are not described herein again.

2. Media renegotiation: In addition to a basic call, media services in an IMS network further include a large quantity of supplementary services. These services need to perform the media renegotiation after media negotiation has been completed once. For example, typical media renegotiation includes:
(1) Announcement: For example, in terms of a service connected after announcement playing, for example, a ring back tone, a party in a session needs to be connected to a multimedia resource function MRF for the announcement, and after the announcement is completed, the media renegotiation further needs to be performed to restore a media connection relationship in the session.
(2) Call forwarding: After media negotiation has been completed between a calling party and an original called party, and the call forwarding is triggered, a media connection between the calling party and a call forwarded-to party needs to be re-established.

In the IMS network, media renegotiation services, for example, the announcement playing and the call forwarding, are usually triggered by a service on an AS. However, the AS cannot directly control a media processing network element. Therefore, in an existing IMS network architecture, the AS performs the media negotiation (or the media renegotiation) with a media control network element (for example, an MRFC) by using SIP signaling, and updates media information on the media processing network element (for example, an MRFP), to implement the media redirection.

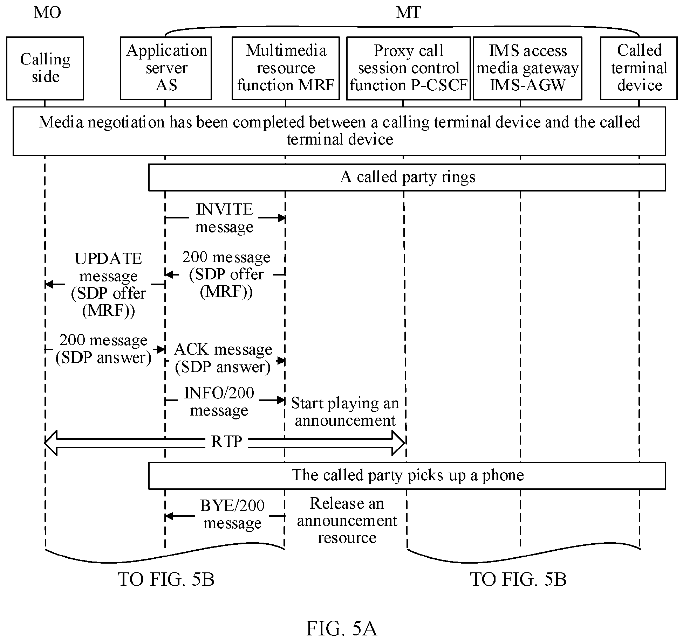

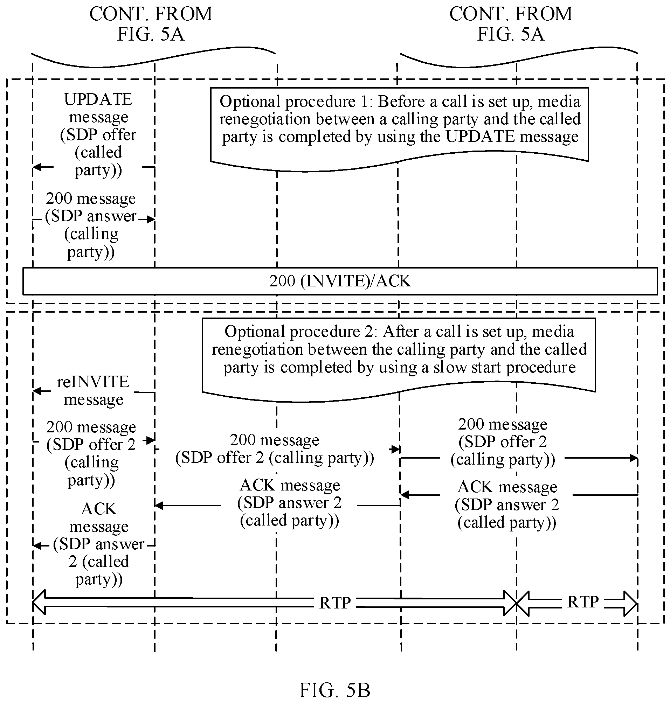

FIG. 5A and FIG. 5B are a schematic flowchart of an IMS announcement. An announcement procedure of a ring back tone service is used as an example for describing an announcement procedure. It can be noted that in FIG. 5A and FIG. 5B, an MRFC and an MRFP are combined and collectively referred to as an MRF. Internal interaction between the MRFC and the MRFP is not listed in the figure. It can be further noted that a basic call procedure and a media negotiation procedure (for a specific procedure, refer to FIG. 4) between a calling side and a called side are omitted in the announcement procedure shown in FIG. 5A and FIG. 5B. It can be further noted that for simplicity of description, a device and network elements on the calling side in FIG. 5A and FIG. 5B are not described in detail. The calling side shown in FIG. 5A and FIG. 5B includes the device and the network elements, for example, a calling terminal device, an IMS-AGW, a P-CSCF, and an AS. The announcement procedure shown in FIG. 5A and FIG. 5B includes the following steps.
A. The AS sends an UPDATE message to the calling side, and the UPDATE message carries MRF media information.
B. Remote media information on the calling side is updated to the MRF media information, media negotiation between the calling side and the MRF is complete, and a media connection is established.
C. After the called party is off-hook, the AS needs to re-establish a media connection between the calling side and the called side, and may complete media redirection in either of the following procedures.

Before a call is set up, the media redirection is completed by using the UPDATE message: The media redirection between the AS and the calling side is completed by using the UPDATE/a 200 message, the remote media information of the calling side is updated to SDP of the called side, and then the call between a calling party and a called party is set up.

After the call is set up, the media redirection is completed by using a reINVITE message: The AS first sets up the call between the calling party and the called party, and then sends the reINVITE message (which does not carry SDP) to the calling party (or the called party), and then the calling side and the called side complete the media redirection between the calling party and the called party by using a 200/an ACK message.

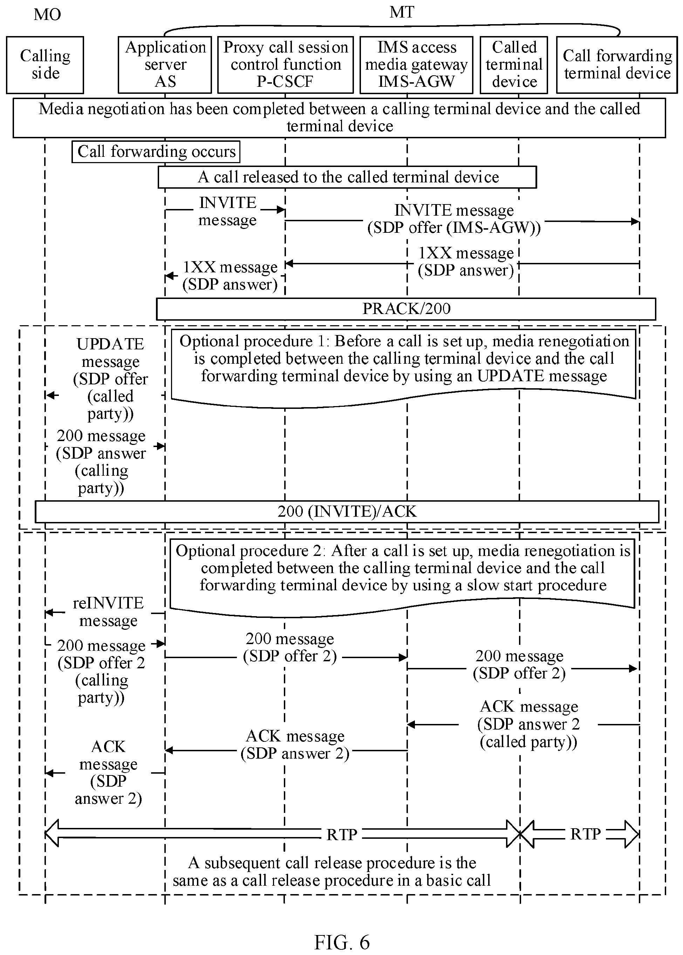

FIG. 6 is a schematic flowchart of IMS call forwarding. In a call forwarding procedure, a calling terminal device, a called terminal device, and a call forwarding terminal device are included. It can be noted that based on an IMS half-call model, the called terminal device and the call forwarding terminal device should correspond to different IMS logical network elements. For simplicity of description, no distinction is made in FIG. 6 (in other words, it is assumed that the called terminal device and the call forwarding terminal device use a same IMS-AGW, P-CSCF, and AS). It should further be noted that the call forwarding procedure shown in FIG. 6 is only for a scenario in which call forwarding occurs after a calling party and a called party have completed media negotiation. In an actual service, there is also a scenario (for example, an unconditional call forwarding scenario) in which the call forwarding occurs before the calling party and the called party complete the media negotiation. This is not limited herein. The call forwarding procedure shown in FIG. 6 includes the following steps.
A. After triggering the call forwarding, the AS sends an initial INVITE message to the call forwarding terminal device by using the P-CSCF, and the initial INVITE message carries calling media information (an SDP offer).
B. The call forwarding terminal device sends a 1XX (which is usually 183 or 180) response message to the AS by using the P-CSCF, and the 1XX response message carries an SDP answer. After receiving the 1XX response message, similar to an announcement scenario, the AS may complete media redirection in either of the following procedures.

Before a call is set up, the media redirection is completed by using an UPDATE message.

After the call is set up, the media redirection is completed by using a reINVITE message.

A specific implementation of completing the media redirection in FIG. 6 is similar to the announcement procedure. Details are not described herein again.

The media renegotiation includes a complex end-to-end signaling procedure. In an aspect, a service AS needs to deeply participate in a SIP renegotiation OA process, sense an OA status, understand SDP content, and determine to use different procedures based on the OA status. However, the renegotiation OA process is usually unrelated to service logic. This causes coupling of the service logic and the media negotiation. In another aspect, one-way renegotiation initiated by the service AS may cause media renegotiation flapping. For example, in the announcement scenario, after announcement playing ends, the AS updates remote media information of the calling side to SDP of a called party by using the UPDATE message. The calling party replies to the SDP answer in a 200 (UPDATE) message. The SDP answer needs to be the same as SDP included in the initial INVITE message by the calling side. If the SDP answer is different from SDP included in the initial INVITE message sent by the calling side, the AS needs to complete one-way negotiation with a called side by using the UPDATE/200 message again. In an extreme scenario, if SDP answers replied to by the calling side and the called side in 200 (UPDATE) messages are different from those of a last time, the media renegotiation flapping occurs, and the media negotiation between the calling side and the called side cannot be completed. As a result, a call cannot be set up normally.

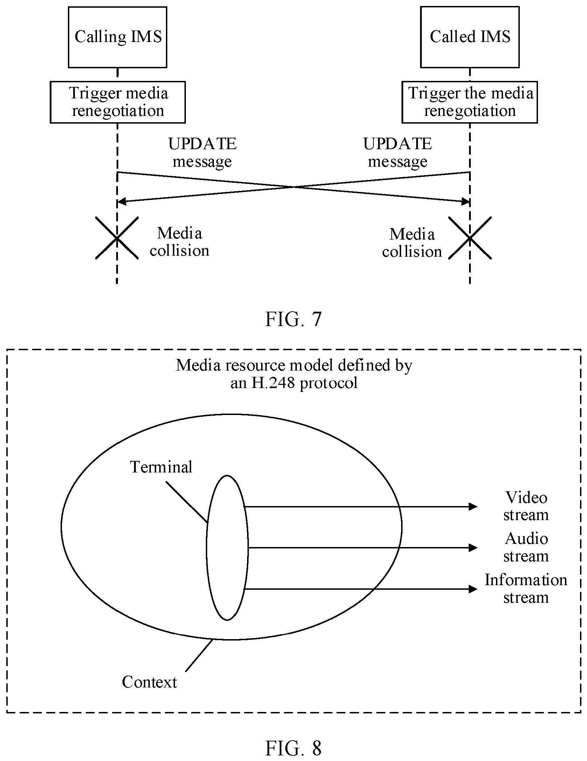

3. Media collision: One communication party sends an SDP offer to a peer end by using an UPDATE (or reINVITE) and receives an SDP offer from the peer end before receiving an SDP answer sent by the peer end as a response. For example, FIG. 7 is a schematic diagram of a media collision. Both an IMS on a calling side and an IMS on a called side trigger media renegotiation and simultaneously send an UPDATE (or reINVITE) message to a peer end. As a result, a media collision occurs.

4. Media resource model based on a media gateway control protocol: In addition to an OA mechanism based on the SDP protocol, there is further the media resource model based on the media gateway control protocol (for example, H.248). FIG. 8 is a schematic diagram of a media resource model defined in an H.248 protocol. The media resource model includes a terminal (terminal) and a context (context). The terminal is a logical entity, and is configured to send and receive one or more media. A media type may be a narrowband slot, an analog line, an IP-based RTP stream, or the like. For example, the terminal may send a video stream (video stream), an audio stream (audio stream), an information stream (message stream), and the like, as shown in FIG. 8. It can be noted that one terminal belongs to and can belong only to one context. The context indicates a connection relationship between terminals, and describes a topology relationship between terminals and a parameter of media mixing/exchange. Based on the media resource model shown in FIG. 8, the H.248 protocol further defines a corresponding protocol interface. A control network element manages internal media resources and the connection relationship by using the protocol interface. The protocol interface includes but is not limited to: an Add command (used for adding a new terminal in the context), a Modify command (used to modify an attribute, an event, and the like of the terminal), a Subtract command (used to delete the terminal from the context and return a statistical status of the terminal), a Move command (used to move the terminal from one context to another context), and a Notify command (used to notify the control network element of a detected event).

5. Media resource model based on a service-oriented interface: Most open-source media servers in an industry provide a service-oriented interface, for example, a REST API or an RPC, and is configured to control a media processing network element, typically, for example, Kurento. A logical architecture of Kurento includes modules, for example, a Kurento media server (Kurento Media Server, KMS) and an application server (application server, AS). The KMS is equivalent to the media processing network element in an IMS, and the AS is equivalent to a media control network element in an IMS network. The AS controls the KMS by using a Kurento protocol. The Kurento protocol uses a websocket-based JSON-RPC interface. Similar to the H.248 protocol, the KMS also internally provides a corresponding media resource model. The Kurento protocol is used to describe management and a connection relationship of media resources. A KMS media resource model uses an object-oriented idea and abstracts media resources into various objects. A most main media resource object is a media pipeline and a media element. The KMS uses a pipeline architecture for describing a media service. The media pipeline object indicates a media processing pipeline, and is used for describing a connection topology relationship between media processing objects. The media pipeline object is equivalent to the context in the H.248 protocol. The media element indicates a media processing component object. Based on a function provided by a media processing component, the media processing component is classified into an endpoint, a filter, a hub, and the like. The endpoint mainly provides receiving and sending of a media stream, and is equivalent to the terminal in the H.248. The filter mainly provides some media processing capabilities, for example, audio and video codecs. The KMS provides rich media processing capabilities by using the filter and has good scalability. Similar to the H.248 protocol, the Kurento protocol describes the management (including creation, modification, and deletion) of the media resources, event subscription, and the connection topology relationship of the media resources. A format of the Kurento protocol is JSON (or may use another format).

The following describes in detail the method in embodiments of this application.

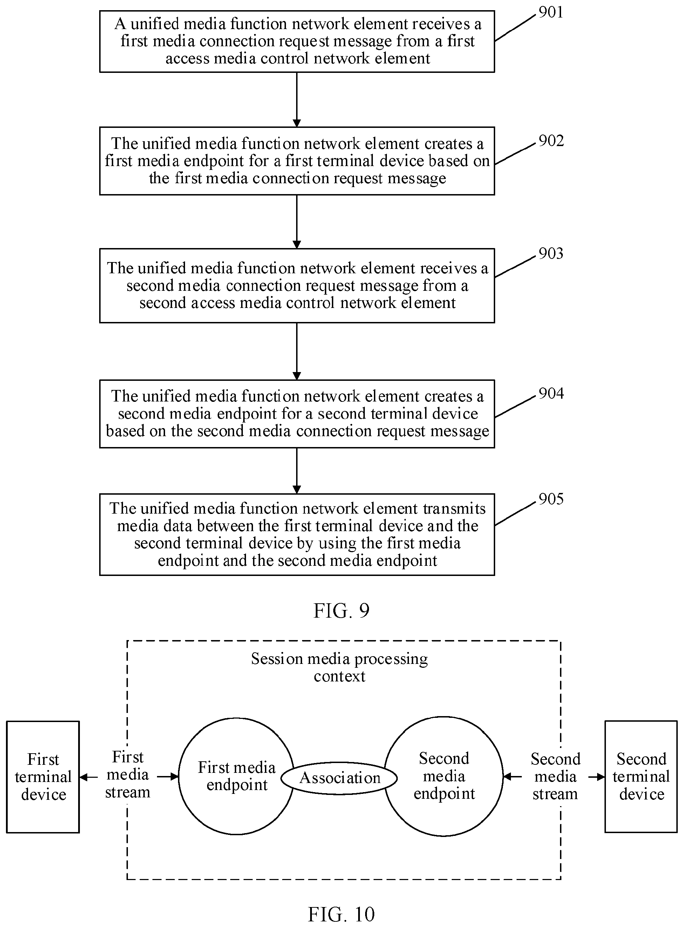

FIG. 9 is a schematic flowchart of a call processing method according to an embodiment of this application. The call processing method is performed by a unified media function network element UMF, and includes the following steps.

901: The unified media function network element receives a first media connection request message from a first access media control network element.

In this embodiment of this application, the first access media control network element is an access media control network element (which is, for example, a calling P-CSCF) on a calling side. The first media connection request message is used for requesting to create a first media endpoint for a first terminal device. For example, if the first terminal device is a calling terminal device, the first media connection request message is used for requesting to create a media endpoint for the calling terminal device.

In an implementation, the first media connection request message is determined by the first access media control network element based on a call setup request message from the first terminal device. The call setup request message may be, for example, an INVITE message in a basic call procedure. The INVITE message carries media information (SDP) of the first terminal device. The first access media control network element receives the INVITE message, obtains the media information of the first terminal device, and generates the first media connection request message based on the media information of the first terminal device. For example, the first access media control network element obtains IP address information, port information, and protocol type information in each m-line for each m-line of SDP based on SDP of the first terminal device. The first access media control network element determines, based on the IP address information, the port information, and the protocol type information in each m-line, that the first media connection request message includes the IP address information, the port information, and the protocol type information in each m-line of SDP of the first terminal device.

902: The unified media function network element creates the first media endpoint for the first terminal device based on the first media connection request message.

In this embodiment of this application, similar to the terminal in the media resource model shown in FIG. 8, a media endpoint is a logical entity, and is configured to send and receive one or more media. One media endpoint (Endpoint) is configured to identify a 5-tuple of one IP connection, including a local IP address, a remote IP address, a local port, a remote port, a local transmission type, and a remote transmission type. The local IP address and the local port of the endpoint are an IP address and a port of the unified media function network element. The remote IP address and the remote port of the endpoint are an IP address and a port of a connected destination party. For example, if the first media endpoint is a media endpoint created for the first terminal device, a local IP address and a local port of the first media endpoint are the IP address and the port of the UMF, and a remote IP address and a remote port of the first media endpoint are an IP address and a port of the first terminal device. The transmission type may include but is not limited to RTP over user datagram protocol (user datagram protocol, UDP), data channel (data channel) over UDP, datagram transport layer security (datagram transport layer security, DTLS), stream control transmission protocol (stream control transmission protocol, SCTP), and the like.

In an implementation, different media endpoints are distinguished between by using resource identifiers of the media endpoints, for example, distinguished between by using uniform resource locators (uniform resource locators, URLs). A resource identifier of the media endpoint is EndpointURL. A format of EndpointURL is endpoints/{ endpoint_id}, where endpoints indicates that the URL is EndpointURL, and {endpoint_id} is an endpoint number and is dynamically allocated during running. It may be understood that when creating the first media endpoint, the UMF also creates a resource identifier of the first media endpoint. The resource identifier of the first media endpoint is, for example, Endpoint1URL.

Optionally, the unified media function network element further creates a first media stream for the first terminal device based on the first media connection request message. In this embodiment of this application, a media stream is similar to the audio stream, and the like in the media resource model shown in FIG. 8, and includes detailed information about the media stream. For example, the media stream includes information about audio and video codecs, and the like. One endpoint may have a plurality of streams, for example, a plurality of video streams on one endpoint and a plurality of channels on a data channel in a multi-party call. Different media streams are distinguished between by using resource identifiers of media streams. For example, a resource identifier of the media stream is StreamURL. A format of StreamURL is streams/{stream_id}, where streams indicates that the URL is StreamURL, and {stream_id} is a stream number and is dynamically allocated during running. It may be understood that when creating the first media stream, the UMF also creates a resource identifier of the first media stream. For example, the resource identifier of the first media stream is Stream 1 URL.

Optionally, the unified media function network element further creates a session media processing context (Context) based on the first media connection request message. The session media processing context may be considered as a logical container, and is configured to record the media endpoint and the media stream. For example, the session media processing context is an RTP processing entity or a data channel processing entity. One context may have a plurality of endpoints, and one endpoint may have a plurality of streams. Different session media processing contexts are distinguished between by using resource identifiers of the session media processing contexts. For example, a resource identifier of the session media processing context is ContextURL. A format of ContextURL is {umf_domain}/contexts/{context_id}, where {umf_domain} is a domain name of the UMF, contexts indicates that the URL is ContextURL, and {context_id} is a context number and is dynamically allocated during running.

Optionally, after creating the first media endpoint for the first terminal device, the UMF sends a media connection response message to the first access media control network element. The media connection response message includes the resource identifier of the first media endpoint and the resource identifier of the first media stream. After receiving the media connection response message, the first access media control network element may send the call setup request message (for example, the INVITE message) to a subsequent network element. The INVITE message includes an SDP offer generated by the first access media control network element based on information, for example, the remote IP address, the remote port, and an audio and video codec type of the first media endpoint, and further includes a newly added extended SIP header field (for example, a Local-Media header field). The newly added extended SIP header field carries the resource identifier of the first media endpoint. The INVITE message is forwarded by an intermediate network element, for example, a CSCF/an AS on the calling side and a called side. The Local-Media header field is transparently transmitted by the intermediate network element.

903: The unified media function network element receives a second media connection request message from a second access media control network element.

In this embodiment of this application, the second access media control network element is an access media control network element (which is, for example, a called P-CSCF) on the called side. The second media connection request message is used for requesting to create a second media endpoint for a second terminal device. For example, if the second terminal device is a called terminal device, the second media connection request message is used for requesting to create a media endpoint for the called terminal device.

In an implementation, the second media connection request message is determined by the second access media control network element based on the INVITE message. For example, the second access media control network element receives the INVITE message described in a step 902, obtains the resource identifier of the first media endpoint from the Local-Media header field, and obtains the information, for example, the remote IP address, the remote port, and the audio and video codec type of the first media endpoint, from the INVITE message. The second access media control network element determines that the second media connection request message includes the information, for example, the remote IP address, the remote port, and the audio and video codec type of the first media endpoint, and sends the second media connection request message to the UMF.

904: The unified media function network element creates the second media endpoint for the second terminal device based on the second media connection request message.

Similar to the first media endpoint described in the foregoing embodiment, the second media endpoint is also a logical entity, and is configured to send and receive one or more media. A local IP address and a local port of the second media endpoint are the IP address and the port of the unified media function network element. A remote IP address and a remote port of the second media endpoint are an IP address and a port of the second terminal device. In an implementation, a resource identifier of the second media endpoint is similar to the resource identifier of the first media endpoint. For example, the resource identifier of the second media endpoint is Endpoint2URL.

Optionally, the unified media function network element further creates a second media stream for the second terminal device based on the second media connection request message, and creates a resource identifier of the second media stream. For a specific creation manner, refer to corresponding descriptions in the step 902. Details are not described herein again. For example, the resource identifier of the second media stream is Stream2URL.

In an implementation, when creating the second media endpoint and the second media stream, the unified media function network element may create the second media endpoint and the second media stream in the session media processing context described in the step 902, and does not need to create a new session media processing context. For example, FIG. 10 is a schematic diagram of a session media processing context according to an embodiment of this application. The session media processing context includes the first media endpoint, the second media endpoint, the first media stream, and the second media stream. The resource identifier of the session media processing context is ContextURL. The format of ContextURL is {umf_domain}/contexts/{context_id}. It is assumed that {umf_domain} is umf.huawei.com, and a context number is 1000. In this case, ContextURL is umf.huawei.com/contexts/1000. It is assumed that a first media endpoint number is 5000. In this case, Endpoint1URL is umf.huawei.com/contexts/1000/endpoints/5000. It is assumed that a second media endpoint number is 6000. In this case, Endpoint2URL is umf.huawei.com/contexts/1000/endpoints/6000.

In an implementation, the unified media function network element sends the resource identifier of the first media endpoint to the first access media control network element, and sends the resource identifier of the second media endpoint to the second access media control network element. In other words, the UMF may send EndpointURL (StreamURL or ContextURL) to all network elements in an IMS trusted domain, so that all network elements in the IMS trusted domain can directly control the UMF. In this way, it is possible to share media resources on the calling side and the called side in an IMS half-call model. Logically, only one UMF is needed, and only one media forwarding is needed. In addition, the media resources are saved.

The UMF transfers URLs of the media resources. For example, the UMF sends Endpoint1URL, Endpoint2URL, Stream1URL, and Stream2URL to an access media control network element on an MO/MT side, and the access media control network element on the MO/MT side may transparently transmit the URL to a plurality of ASs, to facilitate sharing the media resources between the network element on the MO/MT side and the plurality of ASs, reduce a quantity of media forwarding hops, avoid a media service conflict and a media collision that occurs when the plurality of ASs are connected in series, and reduce media resource waste. An interface provided by the UMF for an IMS network element may use various control protocols, including but not limited to the H.248 media gateway control protocol, a RESTful API, an RPC, and the like.

905: The unified media function network element transmits media data between the first terminal device and the second terminal device by using the first media endpoint and the second media endpoint.

The unified media function network element creates the first media endpoint and the second media endpoint, creates the first media stream and the second media stream, and is configured to transmit the media data between the first terminal device and the second terminal device. In an implementation, the unified media function network element associates the first media endpoint with the second media endpoint. For example, the session media processing context shown in FIG. 10 further includes an association (association) between the first media endpoint and the second media endpoint, and is configured to describe an association between media endpoints. For example, the first media endpoint and the second media endpoint are associated by using an association. For a media stream transmitted by a media endpoint, one input stream may be associated with a plurality of output streams (that is, replication), and a plurality of input streams may be associated with one output stream (that is, stream mixing). If the input stream and the output stream have different codec attributes, a codec conversion component needs to be added.

An embodiment of this application provides a call processing method. The call processing method is based on an IMS network architecture and is performed by a newly added unified media function network element. The unified media function network element provides a media access capability by using an access side, to reduce a media detour, reduce a media service transmission delay, and facilitate supporting a requirement of a delay-sensitive service, for example, an extended reality, for the IMS network architecture. In addition, the UMF transfers a URL to a control network element in an IMS trusted domain, to implement media resource sharing between a calling side and a called side in an IMS half-call model. A plurality of control network elements may control a session media processing context of a same UMF network element. Logically, only one UMF is needed, and only one media forwarding is needed. In addition, media resources are saved.

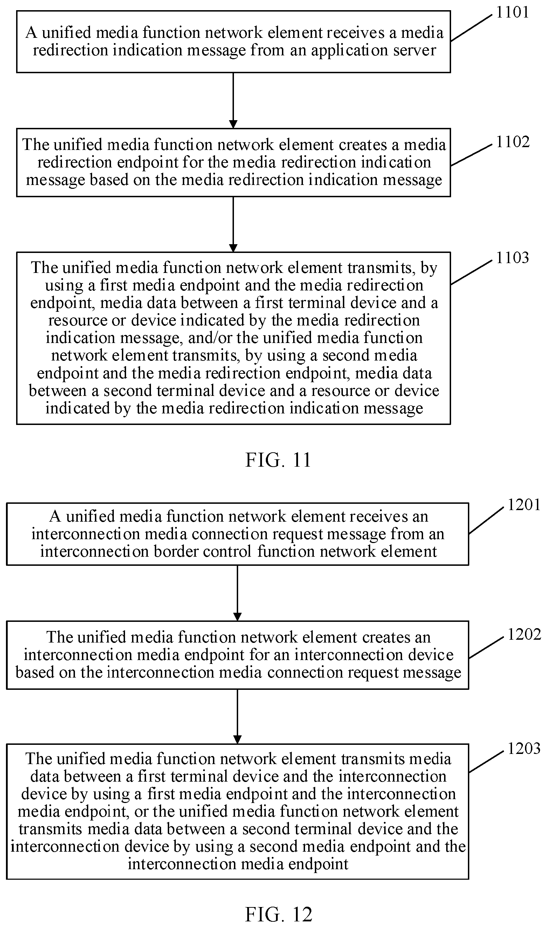

In an example, FIG. 11 is a schematic flowchart of implementing media redirection according to a call processing method after a basic call processing procedure is performed according to an embodiment of this application. After completing the basic call processing procedure with the control network element in the IMS trusted domain, the unified media function network element may further perform a media redirection procedure, including the following steps.

1101: The unified media function network element receives a media redirection indication message from an application server.

After performing the basic call processing procedure based on the steps in the embodiment in FIG. 9, the unified media function network element has established a first media endpoint and a second media endpoint, and associates the first media endpoint with the second media endpoint. When a large quantity of supplementary services (for example, an announcement service and a call forwarding service) further exist in the IMS network, an access media control network element further needs to control the UMF to implement the media redirection. For example, when a called party rings, a called AS starts a ring back tone service processing procedure, and sends the media redirection indication message to the UM. The media redirection indication message is used for requesting to create a media redirection endpoint for a resource or device indicated by the media redirection indication message. The resource indicated by the media redirection indication message is, for example, an announcement resource. The announcement resource is for playing an announcement to a specified media endpoint, to play the announcement to a specified terminal device. The device indicated by the media redirection indication message is, for example, a third terminal device, that is, a new terminal device other than a first terminal device and a second terminal device. The third terminal device may perform the media redirection with the first terminal device (in other words, the second terminal device no longer establishes a media connection to the first terminal device), or may perform the media redirection with the second terminal device. This is not limited in this embodiment.

1102: The unified media function network element creates a media redirection endpoint for the media redirection indication message based on the media redirection indication message.

In an implementation, the unified media function network element creates, based on the resource indicated by the media redirection indication message, the media redirection endpoint for the resource indicated by the media redirection indication message. The resource indicated by the media redirection indication message is the announcement resource. For example, when the announcement resource is a voice ring back tone, the UMF creates a media redirection endpoint for the voice ring back tone. When the announcement resource is a video ring back tone, the UMF creates a first media redirection endpoint (that is, an audio endpoint) and a second media redirection endpoint (that is, a video endpoint) for the video ring back tone.

Optionally, when the media redirection indication message indicates the first media endpoint to perform the media redirection, the unified media function network element associates the first media endpoint with the media redirection endpoint based on the media redirection indication message. In this embodiment of this application, it is assumed that the announcement resource is a resource stored in the UMF and may be invoked by the UMF. In this case, the unified media function network element plays the announcement to the first terminal device by using the first media endpoint and the media redirection endpoint. For example, the UMF plays the voice color ring back tone to the first terminal device.

Optionally, when the media redirection indication message indicates the second media endpoint to perform the media redirection, the unified media function network element associates the second media endpoint with the media redirection endpoint based on the media redirection indication message. The unified media function network element plays an announcement to the second terminal device by using the second media endpoint and the media redirection endpoint.

It can be noted that in the foregoing announcement process, the AS needs to directly modify a media connection of the UMF only by using a non-OA media control interface (for example, a service-oriented interface). For example, when the first media endpoint is associated with the media redirection endpoint, the unified media function network element changes an association between the first media endpoint and the second media endpoint into an association between the first media endpoint and the media redirection endpoint. For another example, when the second media endpoint is associated with the media redirection endpoint, the unified media function network element changes the association between the second media endpoint and the first media endpoint into an association between the second media endpoint and the media redirection endpoint. In other words, the UMF needs to modify an association only between media endpoints, and does not need to update media information on a terminal side. Therefore, a media redirection procedure on the terminal side does not need to be performed, thereby avoiding possible problems, for example, a service conflict and a media collision. In addition, in the foregoing announcement process, the UMF deployed on the access side directly provides an announcement. This facilitates reducing a media detour and reducing a delay.

Optionally, when after the announcement is completed, the first terminal device and the second terminal device further have a service connected after announcement playing, the UMF further re-associates the first media endpoint with the second media endpoint based on indication information of a first access media control network element and a second access media control network element. Therefore, media data of the first terminal device and the second terminal device in the service connected after announcement playing is transmitted by using the first media endpoint and the second media endpoint.

In an implementation, the unified media function network element creates, based on the device indicated by the media redirection indication message, a media redirection endpoint for the device indicated by the media redirection indication message. For example, the device indicated by the media redirection indication message is the third terminal device. The third terminal device is a device corresponding to a call forwarding service, in other words, the first terminal device/the second terminal device may trigger the call forwarding service, and forwards a call to the third terminal device. The unified media function network element creates a third media endpoint for the third terminal device based on the media redirection indication message.

Optionally, when the media redirection indication message indicates the first media endpoint to perform the media redirection, the unified media function network element associates the first media endpoint with the third media endpoint based on the media redirection indication message. The unified media function network element transmits media data between the first terminal device and the third terminal device by using the first media endpoint and the third media endpoint. Optionally, when the media redirection indication message indicates the first media endpoint to perform the media redirection, the unified media function network element further receives a media connection cancellation message from the second access media control network element. The media connection cancellation message is used for requesting to delete the second media endpoint. In other words, when the first media endpoint performs the media redirection, the UMF deletes, based on the media connection cancellation message, the second media endpoint that has established a media connection to the first media endpoint. Then, the UMF creates the third media endpoint for the third terminal device based on the media redirection indication message, and associates the first media endpoint with the third media endpoint.

When the first media endpoint is associated with the third media endpoint, the unified media function network element updates an association between the first media endpoint and the second media endpoint. In other words, in the foregoing call forwarding process, the AS needs to directly modify the media connection of the UMF only by using the non-OA media control interface and not by using a complex media renegotiation procedure, to avoid possible problems, for example, the service conflict and the media collision. It can be noted that in the foregoing call forwarding process, when codec information of a terminal device changes, only one-way negotiation (for example, only the codec information needs to be negotiated) is needed, and the media negotiation does not need to be performed between the first terminal device and the third terminal device. This avoids possible problems, for example, media negotiation flapping and terminal compatibility. When an IP address and/or a port of the terminal device change/changes, media information of a peer end does not need to be modified. This avoids possible problems, for example, the media negotiation flapping and the terminal compatibility.

Optionally, when the media redirection indication message indicates the second media endpoint to perform the media redirection, the unified media function network element associates the second media endpoint with the third media endpoint based on the media redirection indication message. The unified media function network element transmits media data between the second terminal device and the third terminal device by using the second media endpoint and the third media endpoint. Optionally, when the media redirection indication message indicates the second media endpoint to perform the media redirection, the unified media function network element further receives a media connection cancellation message from the first access media control network element. The media connection cancellation message is used for requesting to delete the first media endpoint. In other words, when the second media endpoint performs the media redirection, the UMF deletes, based on the media connection cancellation message, the first media endpoint that has established a media connection to the second media endpoint. Then, the UMF creates the third media endpoint for the third terminal device based on the media redirection indication message, and associates the second media endpoint with the third media endpoint.

When the second media endpoint is associated with the third media endpoint, the unified media function network element updates the association between the first media endpoint and the second media endpoint. In other words, in the foregoing call forwarding process, the AS needs to directly modify the media connection of the UMF only by using the non-OA media control interface and not by using the complex media renegotiation procedure, to avoid the possible problems, for example, the service conflict and the media collision.

1103: The unified media function network element transmits, by using the first media endpoint and the media redirection endpoint, media data between the first terminal device and the resource or device indicated by the media redirection indication message, and/or the unified media function network element transmits, by using the second media endpoint and the media redirection endpoint, media data between the second terminal device and the resource or device indicated by the media redirection indication message.

In an implementation, in the announcement service, for the first terminal device on the calling side, the unified media function network element associates the first media endpoint with the media redirection endpoint (an announcement resource endpoint), and plays the announcement to the first terminal device by using the first media endpoint. Optionally, for the second terminal device on the called side, the unified media function network element associates the second media endpoint with the media redirection endpoint, and plays the announcement to the second terminal device by using the second media endpoint.

Optionally, after the announcement is completed, the application server sends an announcement stopping indication message to the unified media function network element. The unified media function network element disassociates the first media endpoint from the media redirection endpoint based on the announcement stopping indication message, or disassociates the second media endpoint from the media redirection endpoint based on the announcement stopping indication message. For example, for the first terminal device on the calling side, after the announcement is completed, the first terminal device and the second terminal device may further have the service connected after announcement playing. In this case, the UMF disassociates the first media endpoint from the media redirection endpoint based on the announcement stopping indication message, and re-associates the first media endpoint with the second media endpoint.

In an implementation, in the call forwarding service, the unified media function network element associates the first media endpoint with the media redirection endpoint (the third media endpoint), and transmits media data between the first terminal device and the third terminal device of a call forwarding party by using the first media endpoint and the third media endpoint.

In an implementation, in a part of services in the IMS network, during playing the announcement, there is also the media redirection. For example, in a calling waiting service, a user A is talking with a user B, and in this case, a user C calls the user A. The user A may associate two sessions. A first session is a normal call, and a second session is held. The AS plays the announcement to a held party (the user B or the user C). Statuses of the two sessions may be switched at any time. In this case, the unified media function network element creates the first media endpoint and the second media endpoint, and associates the first media endpoint with the second media endpoint. The unified media function network element creates the media redirection endpoint (including the media endpoint corresponding to the announcement resource and the third media endpoint). The application server controls, based on a session status, the UMF to transmit media data between different media endpoints based on the session status. For example, when the user A and the user B are talking, the access media control network element and the application server control the UMF to transmit media data between the user A and the user B by using the first media endpoint and the second media endpoint, and play the announcement to the user C by using the media endpoint corresponding to the announcement resource and the third media endpoint.

An embodiment of this application provides a call processing method. The call processing method is based on an IMS network architecture and is performed by a newly added unified media function network element. After the unified media function network element performs a basic call procedure under a control of a control network element in the IMS trusted domain, the unified media function network element may further perform a service procedure (such as an announcement service and a call forwarding service) that needs to perform media redirection. When performing the media redirection procedure, the application server needs to directly modify a media connection of the unified media function network element only by using a non-OA media control interface and not by using a complex media renegotiation procedure, to avoid possible problems, for example, a service conflict and a media collision.

In an example, the call processing methods shown in FIG. 9 and FIG. 11 may be applied to an interconnection scenario. In the interconnection scenario, the UMF is deployed on an interconnection side for implementing media interconnection between an IMS and another network. FIG. 12 is a schematic flowchart of applying a call processing method to the interconnection scenario according to an embodiment of this application, including the following steps.

1201: The unified media function network element receives an interconnection media connection request message from an interconnection border control function network element.

The interconnection media connection request message is used for requesting to create an interconnection media endpoint for an interconnection device. The UMF provides an IP media interconnection capability, and the interconnection device is a device in another IP domain, for example, a terminal device in another IP domain.

In an implementation, the interconnection media connection request message is determined by the interconnection border control function network element based on media information of the interconnection device. For example, the interconnection border control function network element includes the media information of the interconnection device in the interconnection media connection request message, and sends the interconnection media connection request message to the UMF.

1202: The unified media function network element creates an interconnection media endpoint for the interconnection device based on the interconnection media connection request message.

In an implementation, when the interconnection media connection request message is used for requesting to create a media connection for a basic call, the unified media function network element creates the interconnection media endpoint for the interconnection device based on the media information of the interconnection device in the interconnection media connection request message. Optionally, the unified media function network element associates a media endpoint in the UMF and the interconnection media endpoint. For example, when the interconnection media connection request message is used for requesting to create the media connection for the basic call between the first terminal device and the interconnection device, the UMF creates the interconnection media endpoint based on the interconnection media connection request message, and associates the first media endpoint with the interconnection media endpoint. For a specific implementation, refer to the specific implementation in which the UMF creates the first media endpoint/second media endpoint and associates the first media endpoint with the second media endpoint in the embodiment in FIG. 9. Details are not described herein again.

In an implementation, when the interconnection media connection request message is used for requesting to create a media connection for media redirection, the unified media function network element creates the interconnection media endpoint for the interconnection device based on the media information of the interconnection device in the interconnection media connection request message, and disassociates a media endpoint that has performed media negotiation in the UMF. For example, when the interconnection media connection request message is used for requesting to create the media connection for the media redirection between the first terminal device and the interconnection device, the UMF creates the interconnection media endpoint based on the interconnection media connection request message, and associates the first media endpoint with the interconnection media endpoint. In addition, the UMF disassociates the first media endpoint from the second media endpoint. For a specific implementation, refer to the specific implementation in which the UMF creates the media redirection endpoint and associates the first media endpoint with the media redirection endpoint, or associates the second media endpoint with the media redirection endpoint in the embodiment in FIG. 11. Details are not described herein again.

1203: The unified media function network element transmits media data between the first terminal device and the interconnection device by using the first media endpoint and the interconnection media endpoint, or the unified media function network element transmits media data between the second terminal device and the interconnection device by using the second media endpoint and the interconnection media endpoint.

In an implementation, when a user of the IMS calls a user of another IP domain, the first media endpoint is associated with the interconnection media endpoint. The unified media function network element transmits the media data between the first terminal device and the interconnection device by using the first media endpoint and the interconnection media endpoint. In another implementation, when a user of another IP domain calls a user of the IMS, the interconnection media endpoint is associated with the second media endpoint. The unified media function network element transmits the media data between the second terminal device and the interconnection device by using the second media endpoint and the interconnection media endpoint.

Optionally, when the interconnection media endpoint created by the UMF is the media redirection endpoint, and the media redirection procedure is a call forwarding procedure, the UMF transmits media data between a terminal device on a calling side and an interconnection device of a call forwarding party by using a media endpoint (for example, the first media endpoint) on the calling side and the interconnection media endpoint.

The following describes in detail application embodiments in which the call processing methods shown in FIG. 9 to FIG. 12 are applied to specific scenarios.

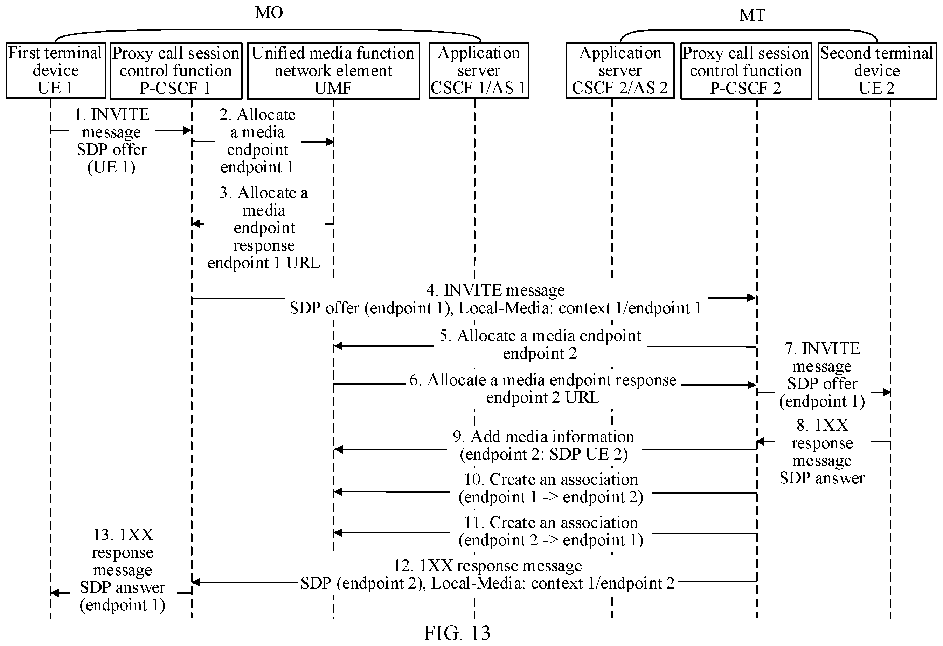

In an example, FIG. 13 is a schematic flowchart of applying the call processing method to a scenario of setting up a basic audio call of a calling party and a called party according to an embodiment of this application. In the scenario of setting up the basic audio call of the calling party and the called party, an MO side and an MT side are included. The MO side includes a first terminal device UE 1, a first access media control network element P-CSCF 1, a unified media function network element UMF, and a first application server CSCF 1/AS 1. The MT side includes a second terminal device UE 2, a second access media control network element P-CSCF 2, and a second application server CSCF 2/AS 2. A procedure of setting up the basic audio call of the calling party and the called party shown in FIG. 13 includes the following steps.
1. The UE 1 sends an INVITE message to the P-CSCF 1, and the INVITE message carries media information SDP (UE 1) of the UE 1.
2. The P-CSCF 1 on a calling side receives the INVITE message, and sends a first media connection request message to the UMF to request to create a first media endpoint. The P-CSCF includes the following content in the first media connection request message based on SDP of the UE 1.
   (1) Generate an endpoint for each m-line in SDP, and correspondingly fill in a remote IP field, a remote port field, and a remote transmission type field in the endpoint based on an IP, a port, and a protocol type in the m-line.
   (2) For each media stream in the m-line, a stream is created in a corresponding endpoint, and at the same time, a payload type (payload type) value in SDP, codec information in each a-line, and the like are filled in the stream.
3. The UMF receives the first media connection request message from the P-CSCF 1, and creates a session media processing context, the first media endpoint, and a first media stream based on the first media connection request message. Specifically, the following three cases are included.

Case 1: If context_id in the first media connection request message is empty, the UMF creates a context. The UMF creates an endpoint 1 and a stream 1 again. For a specific implementation, refer to corresponding descriptions in the embodiment in FIG. 9. Details are not described herein again.

Case 2: If the first media connection request message carries the endpoint and the stream, the UMF allocates separate IDs of the endpoint and the stream to each endpoint and each stream. In addition, the UMF further allocates a local IP and a local port to each endpoint, and fills in a local IP field and a local port field of each corresponding endpoint.

Case 3: If the first media connection request message does not carry the endpoint and the stream, the UMF creates an endpoint for each media type based on a media type (for example, an audio, a video, or a data channel) supported by the UMF, and allocates a corresponding IP and a corresponding port to each endpoint, filling in the local IP field and the local port field of the endpoint. The UMF creates one stream in each endpoint, allocates one payload type value to the one stream, and fills all supported codec types in the stream. The UMF fills the endpoint and the stream in the context, and then sends the first media connection response message to the P-CSCF 1. In this example, it is assumed that IDs of the context, the endpoint, and the stream returned by the UMF are respectively a context 1, the endpoint 1, and the stream 1.

4. The P-CSCF 1 receives the first media connection response message from the UMF, and forwards an INVITE message to a subsequent network element. The INVITE message includes an SDP offer generated based on information, for example, the remote IP, the remote port, and the codec type of the endpoint 1. In addition, an extended SIP header field Local-Media is added. The Local-Media carries the context 1 and the endpoint 1.

Intermediate network elements, for example, the CSCF 1, the AS 1, the CSCF 2, and the AS 2 forward the INVITE message and transparently transmit the Local-Media header field. A specific transmission manner is not shown in this example.

5. The P-CSCF 2 on a called side receives the INVITE message and obtains the context 1 from the Local-Media header field. The P-CSCF 2 sends a second media connection request message to the UMF, and indicates the UMF to create the endpoint and the stream in the context 1. A processing process of the P-CSCF 2 is similar to a processing process of the P-CSCF 1 on the calling side, and difference lies in that the context does not need to be re-created. Details are not described herein again.

6. The UMF receives the second media connection request message from the P-CSCF 2, and creates a second media endpoint and a second media stream based on the second media connection request message. A specific processing process is similar to a processing process in which the UMF creates the first media endpoint and the first media stream. For example, the UMF creates the endpoint and the stream in the context 1, and it is assumed that the endpoint and the stream are an endpoint 2 and a stream 2.

7. The P-CSCF 2 receives a second media connection response message from the UMF, and sends an INVITE message to the UE 2. The INVITE message includes an SDP offer generated based on information, for example, a local IP, a local port, and a codec type of the endpoint 2. In addition, compared with the second media connection response message sent by the P-CSCF 2 to the UMF, the INVITE message does not include the Local-Media header field. It can be noted that to enhance security, a newly added Local-Media header field is transferred only in an IMS trusted domain. When border network elements, for example, a P-CSCF, an MGCF, and an IBCF send SIP messages to a non-IMS domain, the Local-Media header field needs to be deleted. Optionally, if a third-party AS is deployed in the IMS domain, an S-CSCF may delete the Local-Media header field when triggering the third-party AS.

8. The UE 2 sends the second media connection response message (for example, a 183 message or a 180 message) to the P-CSCF 2, and the second media connection response message carries an SDP answer of the UE 2.

9. The P-CSCF 2 receives the second media connection response message, and obtains the SDP answer. The P-CSCF 2 sends a message to the UMF. The message carries media information (the SDP answer) of the UE 2, and is used for indicating that remote media information of the endpoint 2 is the media information of the UE 2. The P-CSCF 2 queries all streams in the endpoint 1 and the endpoint 2, and establishes an association for streams of a same media type. For example, the P-CSCF 2 obtains, by querying, that a stream in the endpoint 1 is the stream 1, a stream in the endpoint 2 is the stream 2, and media types are the same.

10. The P-CSCF 2 sends a first association establishment indication message to the UMF to establish an association from the stream 1 to the stream 2.

11. The P-CSCF 2 sends a second association establishment indication message to the UMF to establish an association from the stream 2 to the stream 1.

12. The P-CSCF 2 sends a 1XX response message to the P-CSCF 1, where the 1XX response message includes an SDP answer generated by the P-CSCF 2 based on information about the local IP and the local port of the endpoint 2 and the codec type returned by the UE 2, and an extended SIP header field Local-Media. The Local-Media carries the context 1 and the endpoint 2.

The intermediate network elements, for example, the CSCF 1, the AS 1, the CSCF 2, and the AS 2 forward the 1XX response message and transparently transmit the Local-Media header field. A specific transmission manner is not shown in this example.

13. The P-CSCF 1 receives the 1XX response message and modifies the local IP and the local port of the endpoint 1 to an IP and a port of the SDP answer in the response message. Then, the P-CSCF 1 sends the 1XX response message to the UE 1 and deletes the Local-Media header field.

A subsequent procedure is the same as implementation of a basic call processing procedure in an existing protocol. Details are not described herein again.

It can be noted that to avoid a conflict caused by a plurality of control nodes operating a same media resource, the following principles may be used for operating the same media resource.
(1) Instances, for example, the context, the endpoint, and the stream can be modified and deleted only by an instance creator. Another control node can only be queried.
(2) The UMF restricts an operation performed by a control node on an internal resource instance by recording an identifier of the creator or by using a mechanism, for example, a token.

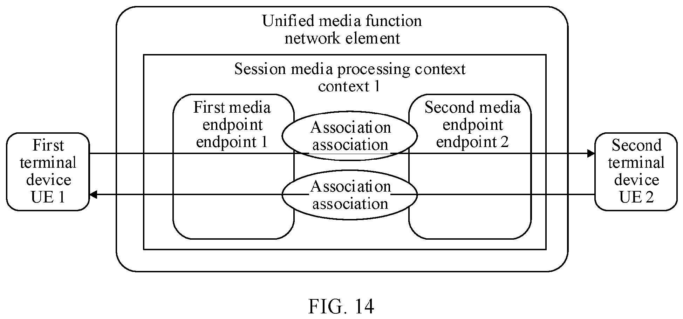

In an implementation, FIG. 14 is a schematic diagram of a media connection topology of an audio call according to an embodiment of this application. An audio stream between a first terminal device UE 1 on a calling side and a second terminal device UE 2 on a called side is transmitted by using a first media endpoint endpoint 1 and a second media endpoint endpoint 2 that are created by a UMF, and an association between the endpoint 1 and the endpoint 2.

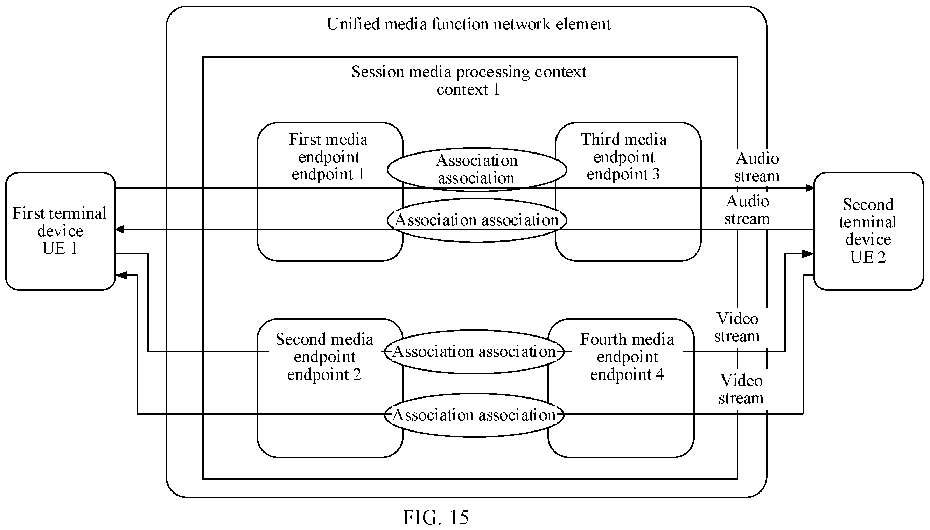

In an implementation, FIG. 15 is a schematic diagram of a media connection topology of a video call according to an embodiment of this application. Compared with FIG. 14, the media connection topology in FIG. 15 has two more media endpoints (an endpoint 3 and an endpoint 4). An audio stream between a first terminal device UE 1 on a calling side and a second terminal device UE 2 on a called side is transmitted by using an endpoint 1 and the endpoint 3 that are created by a UMF, and an association between the endpoint 1 and the endpoint 3. A video stream between the first terminal device UE 1 on the calling side and the second terminal device UE 2 on the called side is transmitted by using an endpoint 2 and the endpoint 4 that are created by the UMF, and an association between the endpoint 2 and the endpoint 4.

It can be seen that in a procedure of setting up a basic audio call of a calling party and a called party in this example, the UMF replaces an original IMS-AGW to provide a media service on an access side, to enrich a media service capability on the access side. The UMF provides a unified media resource identifier URL and a non-OA media control interface (for example, a service-oriented interface). In addition, the UMF transfers the unified media resource identifier URL by extending an IMS signaling procedure, to implement UMF media resource sharing. Based on the foregoing optimization measure, logically, only one UMF is needed in an IMS half-call model, and only one media forwarding is needed, thereby reducing a service transmission delay.

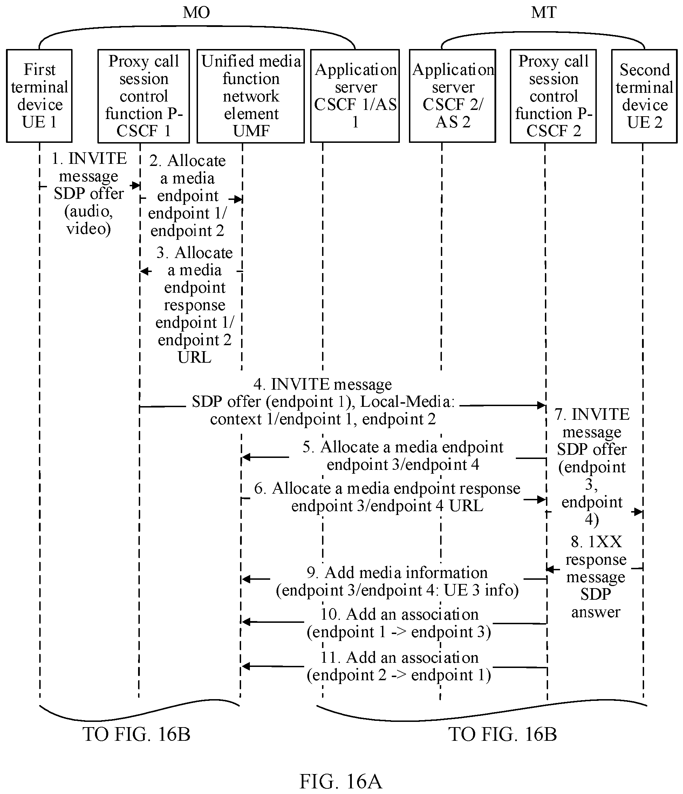

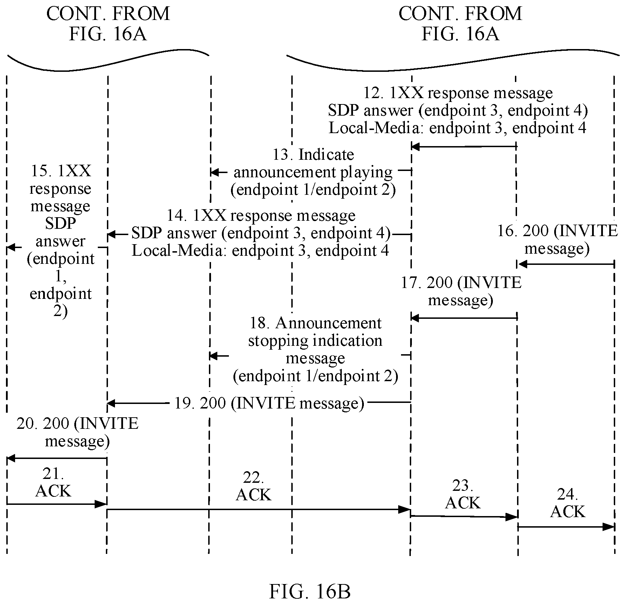

In an example, FIG. 16A and FIG. 16B are a schematic flowchart of applying a call processing method to an announcement service scenario according to an embodiment of this application. In the announcement service scenario, an MO side and an MT side are included. The MO side includes a first terminal device UE 1, a first access media control network element P-CSCF 1, a unified media function network element UMF, and a first application server CSCF 1/AS 1. The MT side includes a second terminal device UE 2, a second access media control network element P-CSCF 2, and a second application server CSCF 2/AS 2. An announcement procedure shown in FIG. 16A and FIG. 16B includes the following steps.

Steps 1 to 12 are the same as the steps 1 to 12 in the basic audio call procedure shown in FIG. 13. A calling P-CSCF and a called P-CSCF separately indicate the UMF to create a context, an endpoint, and a stream. Because the announcement procedure described in FIG. 16A and FIG. 16B is a video call, two endpoints need to be created separately on a calling side and a called side: an endpoint 1 and an endpoint 2, and an endpoint 3 and an endpoint 4, as shown in FIG. 15.

13. The called side rings. After receiving a 180 message, the AS2 on the called side starts processing a video ring back tone service and sends an announcement indication message to the UMF, indicating the UMF to play a video ring back tone (including an audio stream and a video stream) to a user connected to the endpoint 1 or the endpoint 2. For example, the UMF creates a media endpoint corresponding to an announcement resource, and creates an association between the endpoint 1 and the endpoint 2, and respective media endpoints corresponding to announcement resources. In a video ring back tone playing process, the UMF needs to update the association (association) only of the endpoint 1 or the endpoint 2, and does not need to update media information on a UE side. Therefore, a media renegotiation procedure is not needed.

14. The AS 2 sends a 180 response message to the P-CSCF 1 on the calling side, and the 180 response message carries an SDP answer. A specific implementation is similar to a corresponding step in the basic call procedure shown in FIG. 13. Details are not described herein again.

In this example, for processing processes of other network elements, for example, the CSCF 1, the CSCF 2, and the AS 1 on the calling side, refer to corresponding operations in an announcement procedure in an existing protocol, and details are not described herein again.

15. The P-CSCF 1 on the calling side sends the 180 response message to the first terminal device UE 1, and 180 response message carries the SDP answer. A specific implementation is similar to a corresponding step in the basic call procedure shown in FIG. 13. Details are not described herein again.

16. A called party is off-hook, and the second terminal device UE 2 sends a 200 (INVITE) response message to the P-CSCF 2.

17. The P-CSCF 2 sends the 200 (INVITE) response message to the application server AS 2. A specific implementation is similar to a corresponding step in the basic call procedure shown in FIG. 13. Details are not described herein again.

18. After receiving the 200 (INVITE) response message, the AS 2 sends an announcement stopping indication message to the UMF. The announcement stopping indication message indicates the UMF no longer plays an announcement to the UE 1 by using the endpoint 1 or the endpoint 2.

19. The AS 2 sends the 200 (INVITE) response message to the P-CSCF 1 on the calling side.

20. The P-CSCF 1 sends the 200 (INVITE) response message to the UE 1.

21. The UE 1 sends an ACK message to the UE 2 on the called side.

In addition, each network element in an IMS forwards the ACK message to the UE 2, as shown in steps 22 to 24 in FIG. 16A and FIG. 16B.

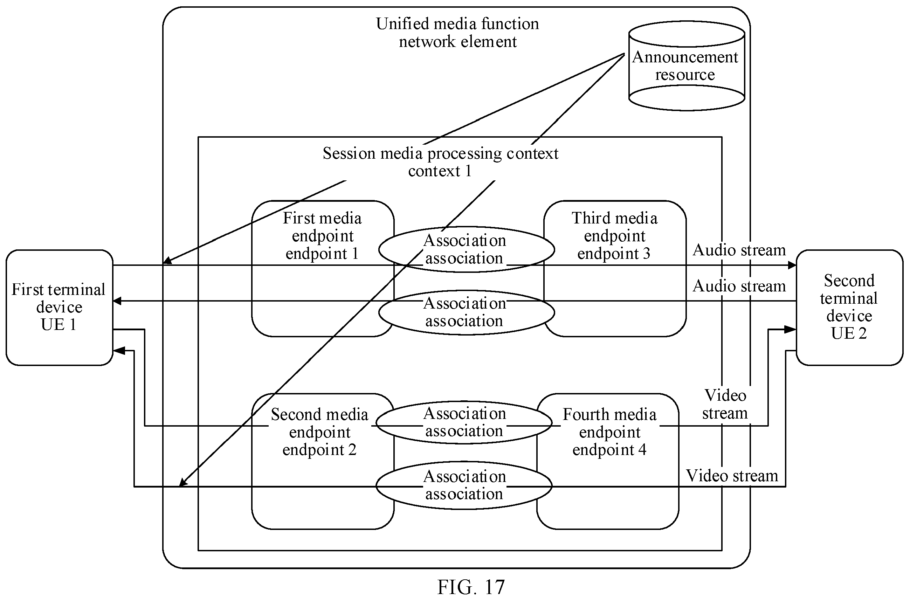

In an implementation, FIG. 17 is a schematic diagram of a media connection topology of a video ring back tone announcement according to an embodiment of this application. A UMF plays an announcement (including a voice and a video) to a first terminal device UE 1 on a calling side by using a media endpoint corresponding to an announcement resource.

It can be seen that in a video ring back tone announcement procedure in this example, when media information needs to be updated, an AS needs to directly modify a media connection of the UMF only by using an interface negotiated by a non-OA and not by using a complex media renegotiation procedure, to avoid possible problems, for example, a service conflict and a media collision. In addition, the UMF deployed on an access side provides the announcement. This facilitates reducing a media detour and reducing a service delay.

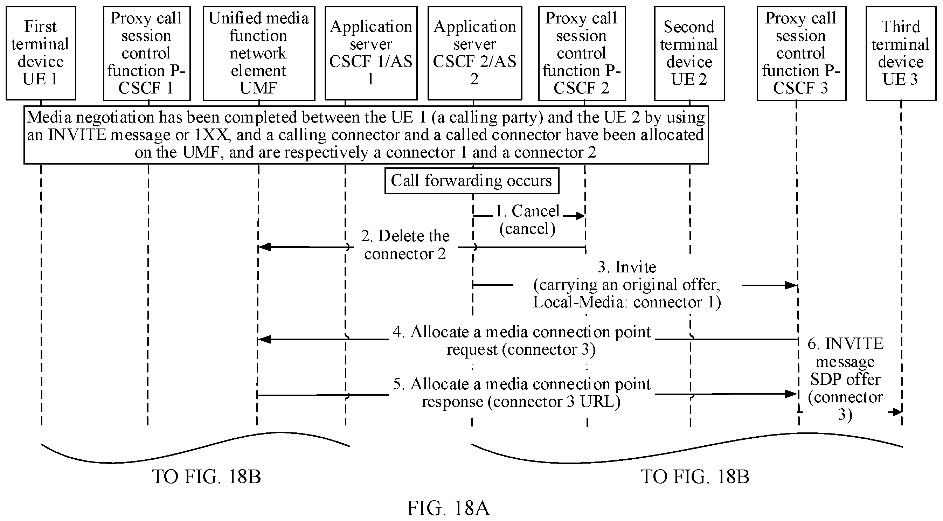

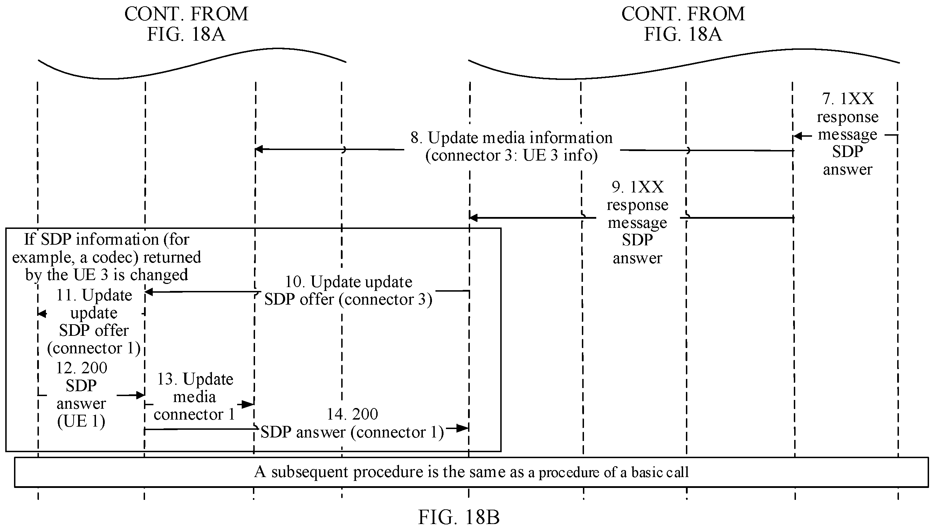

In an example, FIG. 18A and FIG. 18B are a schematic flowchart of applying a call processing method to a call forwarding service scenario according to an embodiment of this application. The call forwarding service scenario includes a first terminal device UE 1, a first access media control network element P-CSCF 1, a unified media function network element UMF, a first application server CSCF 1/AS 1, a second terminal device UE 2, a second access media control network element P-CSCF 2, and a second application server, a CSCF 2/AS 2, a third terminal device UE 3, a third access media control network element P-CSCF 3, and a third application server CSCF 3/AS 3. It is assumed that the UE 1 calls the UE 2 in a specific call forwarding scenario. After media negotiation is completed, the UE 1 triggers call forwarding to the UE 3. It can be noted that the third application server CSCF 3/AS 3 is only configured to transparently transmit a message and does not involve an operation on the message. Therefore, the third application server CSCF 3/AS 3 is not shown in FIG. 18A and FIG. 18B. A call forwarding procedure shown in FIG. 18A and FIG. 18B includes the following steps.
1. The AS 2 on a called side sends a CANCEL message to the P-CSCF 2 to cancel a call from the UE 1 to the UE 2.
2. The P-CSCF 2 receives the CANCEL message, and indicates the UMF to delete a second media endpoint endpoint 2 that has been created and all corresponding associations (for example, including an association between the endpoint 2 and an endpoint 1).
3. The AS 2 sends an INVITE message to the P-CSCF 3 of a call forwarded-to party, and the INVITE message carries an SDP offer and a Local-Media header field of the UE1.
4. The P-CSCF 3 receives the INVITE message, and indicates the UMF to create a third media endpoint endpoint 3 for the UE 3.
5. The UMF creates a URL of the endpoint 3 based on a third media connection request message from the P-CSCF 3, and sends the URL of the endpoint 3 to the P-CSCF 3.
6. The P-CSCF 3 sends an INVITE message to the UE 3.
7. The UE 3 sends a 1XX response message to the P-CSCF 3, and the 1XX response message carries an SDP answer.
8. The P-CSCF 3 indicates the UMF to update remote media information of the endpoint 3. A specific implementation is similar to a corresponding step in the basic call procedure shown in FIG. 13.
9. The P-CSCF 3 sends the 1XX response message to the AS 2, and the 1XX response message carries the SDP answer.

After receiving the 1XX response message, if codec information in the SDP answer does not change, the AS 2 does not need to send the SDP answer to a calling side. A subsequent processing procedure is similar to the basic call procedure.

If the codec information in the SDP answer changes, for example, a codec negotiated by the UE 1 and the UE 2 is G.711, and a codec negotiated by the UE 1 and the UE 3 is G.729, the AS 1 or the AS 2 needs to indicate the UMF to update media information of the calling side. Specifically, the following steps are included.

10. The AS 2 sends an UPDATE message to the P-CSCF 1 on the calling side, and the UPDATE message carries the SDP offer. Parameters, for example, an IP address and a port number in the SDP offer are determined based on a local IP and a local port number of the endpoint 3. The codec information is generated based on the SDP answer fed back by the UE 3.

11. The P-CSCF 1 receives the UPDATE message, and modifies parameters, for example, the IP address and the port number in the SDP offer to information corresponding to the endpoint 1. The P-CSCF 1 sends an UPDATE message to the UE 1.

12. The UE 1 sends a 200 response message to the P-CSCF 1, and the 200 response message carries the SDP answer.

13. The P-CSCF 1 receives the 200 response message, updates a remote IP address and a remote port number of the endpoint 1 based on the IP address and the port in the SDP answer, and updates codec information of the endpoint 1 based on the codec information in the SDP answer.

14. The P-CSCF 1 forwards the 200 response message to the AS 2, and changes the IP address and the port in the SDP answer into the IP address and the port of the endpoint 1.

After receiving the 200 response message, the AS 2 terminates the 200 response message.

It may be understood that different from an existing IMS procedure, if the media IP and the port number returned by the UE 1 on the calling side change, the UMF needs to update the remote IP address and the remote port number corresponding only to the endpoint 1, and does not need to perform media renegotiation with the called side. Therefore, media renegotiation flapping is avoided.

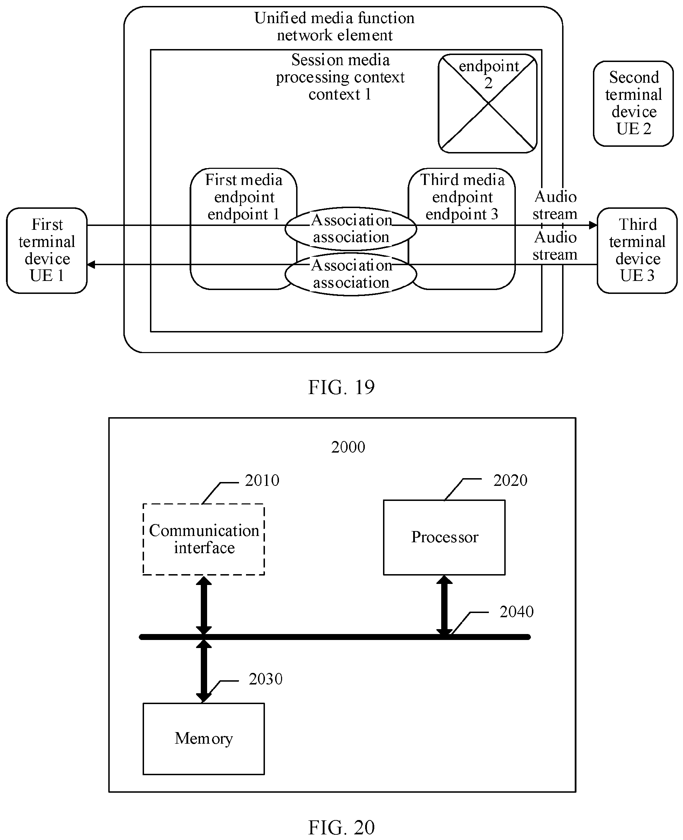

In an implementation, FIG. 19 is a schematic diagram of a media connection topology of a call forwarding service according to an embodiment of this application. When a first terminal device UE 1 forwards a call to a third terminal device UE 3, a UMF deletes a second media endpoint endpoint 2 originally associated with a first media endpoint endpoint 1, and creates a new third media endpoint endpoint 3. An audio stream between the first terminal device UE 1 and the third terminal device UE 3 is transmitted by using the first media endpoint 1 and the third media endpoint 3 that are created by the UMF, and an association between the endpoint 1 and the endpoint 3.

It can be seen that in a call forwarding procedure in this example, when media information needs to be updated, an AS needs to directly modify a media connection of the UMF only by using an interface negotiated by a non-OA and not by using a complex media renegotiation procedure, to avoid possible problems, for example, a service conflict and a media collision. When a media IP or a port of a calling side changes, a remote IP and a remote port of media endpoint only inside the UMF need to be modified, and media renegotiation is not needed to be performed between the calling side and a called side. This avoids possible problems, for example, media renegotiation flapping and terminal compatibility.

To implement the foregoing functions in the method provided in embodiments of this application, the unified media processing network element, the first access media control network element, and the second access media control network element may include a hardware structure and/or a software module. The foregoing functions are implemented in a form of the hardware structure, the software module, or a combination of the hardware structure and the software module. Whether a specific function in the foregoing functions is performed by using the hardware structure, the software module, or the combination of the hardware structure and the software module depends on particular applications and design constraints of the technical solutions.

In embodiments of this application, module division is an example and is merely logical function division. During actual implementation, there may be another division manner. In addition, functional modules in embodiments of this application may be integrated into one processor, each of the modules may exist alone physically, or two or more modules may be integrated into one module. The integrated module may be implemented in a form of hardware, or may be implemented in a form of a software functional module.

FIG. 20 is a call processing apparatus 2000 according to an embodiment of this application, configured to implement a function of the unified media function network element in the foregoing method embodiments. The apparatus may be a device, an apparatus in a device, or an apparatus that can be used together with a device. The apparatus may be a chip system. In this embodiment of this application, the chip system may include a chip, or may include a chip and another discrete component. The call processing apparatus 2000 includes at least one processor 2020, configured to implement the function of the unified media function network element in the call processing method provided in embodiments of this application. For example, the processor 2020 creates the first media endpoint for the first terminal device based on the first media connection request message. Details are not described herein.

The apparatus 2000 may further include at least one memory 2030, configured to store program instructions and/or data. The memory 2030 is coupled to the processor 2020. In this embodiment of this application, the coupling may be an indirect coupling or a communication connection between apparatuses, units, or modules in an electrical form, a mechanical form, or another form, and is used for information exchange between the apparatuses, the units, or the modules. The processor 2020 may operate in cooperation with the memory 2030. The processor 2020 may execute the program instructions stored in the memory 2030. At least one of the at least one memory may be included in the processor.

The apparatus 2000 may further include a communication interface 2010. The communication interface may be, for example, a transceiver, an interface, a bus, a circuit, or an apparatus that can implement a receiving and sending function. The communication interface 2010 is configured to communicate with another device by using a transmission medium. Therefore, an apparatus used in the apparatus 2000 may communicate with the another device. The processor 2020 receives and sends data by using the communication interface 2010, and is configured to implement the method performed by the unified media function network element in embodiments corresponding to FIG. 9 to FIG. 19. For details, refer to detailed descriptions in the method example. Details are not described herein.

In this embodiment of this application, a specific connection medium between the communication interface 2010, the processor 2020, and the memory 2030 is not limited. In this embodiment of this application, in FIG. 20, the memory 2030, the processor 2020, and the communication interface 2010 are connected through a bus 2040. The bus is represented by a thick line in FIG. 20. A connection manner between other components is merely an example for description, and is not limited thereto. The bus may be classified into an address bus, a data bus, a control bus, and the like. For ease of representation, only one thick line is used for representation in FIG. 20, but this does not mean that there is only one bus or only one type of bus.

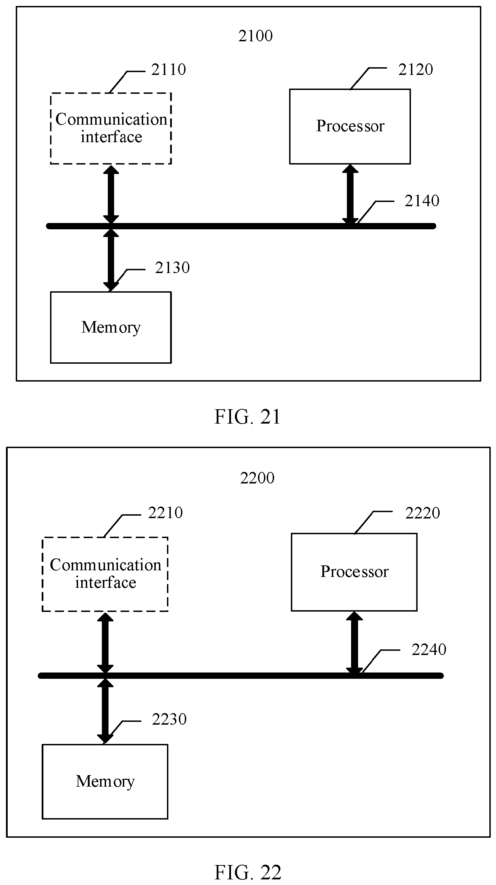

FIG. 21 is another call processing apparatus 2100 according to an embodiment of this application, configured to implement a function of the first access media control network element in the foregoing method embodiments. The apparatus may be a device, an apparatus in a device, or an apparatus that can be used together with a device. The apparatus may be a chip system. The call processing apparatus 2100 includes at least one processor 2120, configured to implement the function of the first access media control network element in the method provided in embodiments of this application. For example, the processor 2120 invokes a communication interface 2110 to send the first media connection request message to the unified media function network element, where the first media connection request message is used for requesting to create the first media endpoint for the first terminal device. For details, refer to detailed descriptions in the method example. Details are not described herein.

The apparatus 2100 may further include at least one memory 2130, configured to store program instructions and/or data. The memory 2130 is coupled to the processor 2120. In this embodiment of this application, the coupling may be an indirect coupling or a communication connection between apparatuses, units, or modules in an electrical form, a mechanical form, or another form, and is used for information exchange between the apparatuses, the units, or the modules. The processor 2120 may operate in cooperation with the memory 2130. The processor 2120 may execute the program instructions stored in the memory 2130. At least one of the at least one memory may be included in the processor.

The apparatus 2100 may further include a communication interface 2110. The communication interface may be, for example, a transceiver, an interface, a bus, a circuit, or an apparatus that can implement a receiving and sending function. The communication interface 2110 is configured to communicate with another device by using a transmission medium. Therefore, an apparatus used in the apparatus 2100 may communicate with the another device. The processor 2120 receives and sends data by using the communication interface 2110, and is configured to implement the method performed by the first access media control network element in embodiments corresponding to FIG. 9 to FIG. 19.

In this embodiment of this application, a specific connection medium between the communication interface 2110, the processor 2120, and the memory 2130 is not limited. In this embodiment of this application, in FIG. 21, the memory 2130, the processor 2120, and the communication interface 2110 are connected through a bus 2140. The bus is represented by a thick line in FIG. 21. A connection manner between other components is merely an example for description, and is not limited thereto. The bus may be classified into an address bus, a data bus, a control bus, and the like. For ease of representation, only one thick line is used for representation in FIG. 21, but this does not mean that there is only one bus or only one type of bus.

FIG. 22 is another call processing apparatus 2200 according to an embodiment of this application, configured to implement a function of the second access media control network element in the foregoing method embodiments. The apparatus may be a device, an apparatus in a device, or an apparatus that can be used together with a device. The apparatus may be a chip system. The call processing apparatus 2200 includes at least one processor 2220, configured to implement the function of the second access media control network element in the method provided in embodiments of this application. For example, the processor 2220 may invoke a communication interface 2210 to send the second media connection request message to the unified media function network element, where the second media connection request message is used for requesting to create the second media endpoint for the second terminal device. For details, refer to detailed descriptions in the method example. Details are not described herein.

The apparatus 2200 may further include at least one memory 2230, configured to store program instructions and/or data. The memory 2230 is coupled to the processor 2220. In this embodiment of this application, the coupling may be an indirect coupling or a communication connection between apparatuses, units, or modules in an electrical form, a mechanical form, or another form, and is used for information exchange between the apparatuses, the units, or the modules. The processor 2220 may operate in cooperation with the memory 2230. The processor 2220 may execute the program instructions stored in the memory 2230. At least one of the at least one memory may be included in the processor.

The apparatus 2200 may further include a communication interface 2210. The communication interface may be, for example, a transceiver, an interface, a bus, a circuit, or an apparatus that can implement a receiving and sending function. The communication interface 2210 is configured to communicate with another device by using a transmission medium. Therefore, an apparatus used in the apparatus 2200 may communicate with the another device. The processor 2220 receives and sends data by using the communication interface 2210, and is configured to implement the method performed by the second access media control network element in embodiments corresponding to FIG. 9 to FIG. 19.

In this embodiment of this application, a specific connection medium between the communication interface 2210, the processor 2220, and the memory 2230 is not limited. In this embodiment of this application, in FIG. 22, the memory 2230, the processor 2220, and the communication interface 2210 are connected by using a bus 2240. The bus is represented by a thick line in FIG. 22. A connection manner between other components is merely an example for description, and is not limited thereto. The bus may be classified into an address bus, a data bus, a control bus, and the like. For ease of representation, only one thick line is used for representation in FIG. 22, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the methods disclosed with reference to embodiments of this application may be directly performed by a hardware processor, or may be performed by using a combination of hardware in the processor and a software module.

In embodiments of this application, the memory may be a non-volatile memory, for example, an HDD or an SSD, or may be a volatile memory, for example, a RAM. The memory is any other medium that can carry or store expected program code in a form of an instruction structure or a data structure and that can be accessed by a computer, but is not limited thereto. In embodiments of this application, the memory may alternatively be a circuit or any other apparatus that can implement a storage function, and is configured to store the program instructions and/or the data.

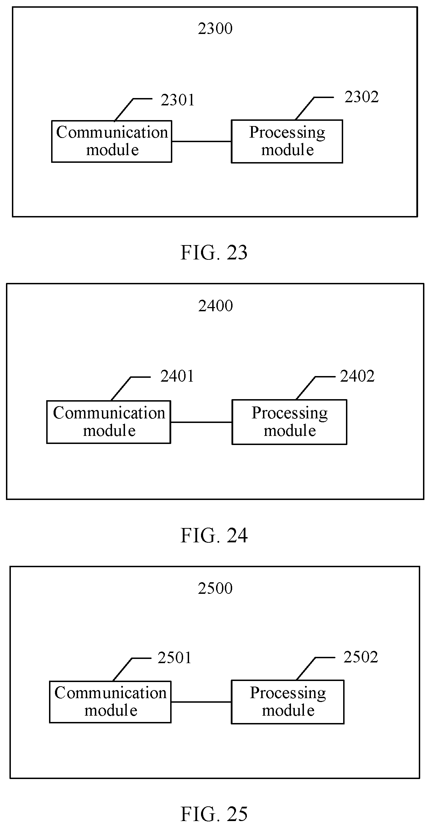

FIG. 23 is a schematic diagram of another call processing apparatus 2300 according to an embodiment of this application. The call processing apparatus may be a unified media processing network element, an apparatus in a unified media processing network element, or an apparatus that can be used together with a unified media processing network element. In a design, the call processing apparatus may include modules that are in one-to-one correspondence with the methods/operations/steps/actions performed and described in the examples corresponding to FIG. 9 to FIG. 19. The module may be implemented by using a hardware circuit, software, or a combination of a hardware circuit and software. In a design, the apparatus may include a communication module 2301 and a processing module 2302. For example, the communication module 2301 is configured to receive the first media connection request message from the first access media control network element. The processing module 2302 is configured to create the first media endpoint for the first terminal device based on the first media connection request message. For details, refer to detailed descriptions in the examples in FIG. 9 to FIG. 19. Details are not described herein.

FIG. 24 is a schematic diagram of another call processing apparatus 2400 according to an embodiment of this application. The call processing apparatus may be a first access media control network element, an apparatus in a first access media control network element, or an apparatus that can be used together with a first access media control network element. In a design, the call processing apparatus may include modules that are in one-to-one correspondence with the methods/operations/steps/actions performed and described in the examples corresponding to FIG. 9 to FIG. 19. The module may be implemented by using a hardware circuit, software, or a combination of a hardware circuit and software. In a design, the apparatus may include a communication module 2401 and a processing module 2402. For example, the communication module 2401 is configured to send the first media connection request message to the unified media function network element. The processing module 2402 is configured to indicate the unified media function network element to create the first media endpoint. For details, refer to detailed descriptions in the examples in FIG. 9 to FIG. 19. Details are not described herein.

FIG. 25 is a schematic diagram of another call processing apparatus 2500 according to an embodiment of this application. The call processing apparatus may be a second access media control network element, an apparatus in a second access media control network element, or an apparatus that can be used together with a second access media control network element. In a design, the call processing apparatus may include modules that are in one-to-one correspondence with the methods/operations/steps/actions performed and described in the examples corresponding to FIG. 9 to FIG. 19. The module may be implemented by using a hardware circuit, software, or a combination of a hardware circuit and software. In a design, the apparatus may include a communication module 2501 and a processing module 2502. For example, the communication module 2501 is configured to send the second media connection request message to the unified media function network element. The processing module 2502 is configured to indicate the unified media function network element to create the second media endpoint. For details, refer to detailed descriptions in the examples in FIG. 9 to FIG. 19. Details are not described herein.

All or a part of the technical solutions provided in embodiments of this application may be implemented by using software, hardware, firmware, or any combination thereof. When the software is used to implement the technical solutions, all or a part of the technical solutions may be implemented in a form of a computer program product. The computer program product includes one or more computer instructions. When computer program instructions are loaded and executed on a computer, the procedures or functions according to embodiments of this application are all or partially generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In embodiments of this application, when there is no logical conflict, embodiments may be mutually referenced. For example, methods and/or terms in the method embodiments may be mutually referenced, and functions and/or terms in the apparatus embodiments may be mutually referenced. For example, functions and/or terms between the apparatus embodiments and the method embodiments may be mutually referenced.

The invention is defined by the appended claims.

## Claims

1. A call processing method, comprising:
receiving (901), by a unified media function network element, a first media connection request message from a first access media control network element, wherein the first media connection request message is used for requesting to create a first media endpoint for a first terminal device in the unified media function network element;
creating (902), by the unified media function network element, the first media endpoint for the first terminal device based on the first media connection request message;
sending, by the unified media function network element, a first media connection response to the first access media control network element, wherein the first media connection response comprises a resource identifier of the first media endpoint;
receiving (903), by the unified media function network element, a second media connection request message from a second access media control network element, wherein the second media connection request message is used for requesting to create a second media endpoint for a second terminal device in the unified media function network element;
creating (904), by the unified media function network element, the second media endpoint for the second terminal device based on the second media connection request message;
sending, by the unified media function network element, a second media connection response to the second access media control network element, wherein the second media connection response comprises a resource identifier of the second media endpoint; and
transmitting (905), by the unified media function network element, media data between the first terminal device and the second terminal device by using the first media endpoint and the second media endpoint.

2. The method according to claim 1, wherein the method further comprises:
associating, by the unified media function network element, the first media endpoint with the second media endpoint.

3. The method according to claim 1, wherein the method further comprises:
receiving, by the unified media function network element, an interconnection media connection request message from an interconnection border control function network element, wherein the interconnection media connection request message is used for requesting to create an interconnection media endpoint for an interconnection device;
creating, by the unified media function network element, the interconnection media endpoint for the interconnection device based on the interconnection media connection request message; and
transmitting, by the unified media function network element, media data between the first terminal device and the interconnection device by using the first media endpoint and the interconnection media endpoint, or transmitting, by the unified media function network element, media data between the second terminal device and the interconnection device by using the second media endpoint and the interconnection media endpoint.

4. The method according to claim 1, wherein the method further comprises:
receiving, by the unified media function network element, a media redirection indication message from an application server, wherein the media redirection indication message is used for requesting to create a media redirection endpoint for a resource or device indicated by the media redirection indication message;
creating, by the unified media function network element, the media redirection endpoint for the media redirection indication message based on the media redirection indication message; and
transmitting, by the unified media function network element by using the first media endpoint and the media redirection endpoint, media data between the first terminal device and the resource or device indicated by the media redirection indication message, and/or transmitting, by the unified media function network element by using the second media endpoint and the media redirection endpoint, media data between the second terminal device and the resource or device indicated by the media redirection indication message.

5. The method according to claim 4, wherein the resource indicated by the media redirection indication message is an announcement resource.

6. The method according to claim 4, wherein the creating, by the unified media function network element, the media redirection endpoint for the media redirection indication message based on the media redirection indication message comprises:
creating, by the unified media function network element, a third media endpoint for a third terminal device based on the media redirection indication message.

7. The method according to claim 4, wherein the method further comprises:
when the first media endpoint is associated with the media redirection endpoint, changing, by the unified media function network element, an association between the first media endpoint and the second media endpoint into an association between the first media endpoint and the media redirection endpoint; or
when the second media endpoint is associated with the media redirection endpoint, changing, by the unified media function network element, an association between the second media endpoint and the first media endpoint into an association between the second media endpoint and the media redirection endpoint.

8. A call processing method, comprising:
sending, by a first access media control network element, a first media connection request message to a unified media function network element, wherein the first media connection request message is used for requesting to create a first media endpoint for a first terminal device in the unified media function network element; and
receiving, by the first access media control network element, a first media connection response from the unified media function network element, wherein the first media connection response comprises a resource identifier of the first media endpoint.

9. The method according to claim 8, wherein the method further comprises:
sending, by the first access media control network element, a session request message to a second access media control network element, wherein the session request message comprises the resource identifier and media information of the first media endpoint; and
receiving, by the first access media control network element, a session response message from the second access media control network element, wherein the session response message comprises a resource identifier and media information of a second media endpoint created for a second terminal device.

10. The method according to claim 8 or 9, wherein the method further comprises:
when the unified media function network element creates a media redirection endpoint for a media redirection indication message, sending, by the first access media control network element, a first media update indication message to the unified media function network element, wherein the first media update indication message indicates the unified media function network element to change an association between the first media endpoint and the second media endpoint into an association between the first media endpoint and the media redirection endpoint.

11. A call processing apparatus (2000, 2100), configured to implement the method according to any one of claims 1 to 10.

12. A computer-readable storage medium, comprising instructions, wherein when the instructions are run on a computer, the computer is enabled to perform the method according to any one of claims 1 to 10.

13. A call processing method, comprising:
sending, by a first access media control network element, a first media connection request message to a unified media function network element, wherein the first media connection request message is used for requesting to create a first media endpoint for a first terminal device in the unified media function network element;
creating (902), by the unified media function network element, the first media endpoint for the first terminal device based on the first media connection request message;
sending, by the unified media function network element, a first media connection response to the first access media control network element, wherein the first media connection response comprises a resource identifier of the first media endpoint;
sending, by a second access media control network element, a second media connection request message to the unified media function network element, wherein the second media connection request message is used for requesting to create a second media endpoint for a second terminal device in the unified media function network element;
creating (904), by the unified media function network element, the second media endpoint for the second terminal device based on the second media connection request message;
sending, by the unified media function network element, a second media connection response to the second access media control network element, wherein the second media connection response comprises a resource identifier of the second media endpoint; and
transmitting (905), by the unified media function network element, media data between the first terminal device and the second terminal device by using the first media endpoint and the second media endpoint.

14. The method according to claim 13, wherein the method further comprises:
receiving (1201), by the unified media function network element, an interconnection media connection request message from an interconnection border control function network element, wherein the interconnection media connection request message is used for requesting to create an interconnection media endpoint for an interconnection device;
creating (1202), by the unified media function network element, the interconnection media endpoint for the interconnection device based on the interconnection media connection request message; and
transmitting (1203), by the unified media function network element, media data between the first terminal device and the interconnection device by using the first media endpoint and the interconnection media endpoint, or transmitting, by the unified media function network element, media data between the second terminal device and the interconnection device by using the second media endpoint and the interconnection media endpoint.

## Patentansprüche

1. Anrufverarbeitungsverfahren, umfassend:
Empfangen (901), durch ein Netzelement einer einheitlichen Medienfunktion, einer ersten Medienverbindungsanforderungsnachricht von einem ersten Netzelement einer Zugangsmediensteuerung, wobei die erste Medienverbindungsanforderungsnachricht zum Anfordern der Erzeugung eines ersten Medienendpunkts für eine erste Endgerätevorrichtung in dem Netzelement der einheitlichen Medienfunktion verwendet wird;
Erzeugen (902), durch das Netzelement der einheitlichen Medienfunktion, des ersten Medienendpunkts für die erste Endgerätevorrichtung basierend auf der ersten Medienverbindungsanforderungsnachricht;
Senden, durch das Netzelement der einheitlichen Medienfunktion, einer ersten Medienverbindungsantwort an das erste Netzelement der Zugangsmediensteuerung, wobei die erste Medienverbindungsantwort eine Ressourcenkennung des ersten Medienendpunkts umfasst;
Empfangen (903), durch das Netzelement der einheitlichen Medienfunktion, einer zweiten Medienverbindungsanforderungsnachricht von einem zweiten Netzelement einer Zugangsmediensteuerung, wobei die zweite Medienverbindungsanforderungsnachricht zum Anfordern der Erzeugung eines zweiten Medienendpunkts für eine zweite Endgerätevorrichtung in dem Netzelement der einheitlichen Medienfunktion verwendet wird;
Erzeugen (904), durch das Netzelement der einheitlichen Medienfunktion, des zweiten Medienendpunkts für die zweite Endgerätevorrichtung basierend auf der zweiten Medienverbindungsanforderungsnachricht;
Senden, durch das Netzelement der einheitlichen Medienfunktion, einer zweiten Medienverbindungsantwort an das zweite Netzelement der Zugangsmediensteuerung, wobei die zweite Medienverbindungsantwort eine Ressourcenkennung des zweiten Medienendpunkts umfasst; und
Übertragen (905), durch das Netzelement der einheitlichen Medienfunktion, von Mediendaten zwischen der ersten Endgerätevorrichtung und der zweiten Endgerätevorrichtung unter Verwendung des ersten Medienendpunkts und des zweiten Medienendpunkts.

2. Verfahren nach Anspruch 1, wobei das Verfahren ferner Folgendes umfasst:
Assoziieren, durch das Netzelement der einheitlichen Medienfunktion, des ersten Medienendpunkts mit dem zweiten Medienendpunkt.

3. Verfahren nach Anspruch 1, wobei das Verfahren ferner Folgendes umfasst:
Empfangen, durch das Netzelement der einheitlichen Medienfunktion, einer Zusammenschaltungs-Medienverbindungsanforderungsnachricht von einem Netzelement einer Zusammenschaltungs-Grenzwertsteuerungsfunktion, wobei die Zusammenschaltungs-Medienverbindungsanforderungsnachricht zum Anfordern der Erzeugung eines Zusammenschaltungs-Medienendpunkts für eine Zusammenschaltungsvorrichtung verwendet wird;
Erzeugen, durch das Netzelement der einheitlichen Medienfunktion, des Zusammenschaltungs-Medienendpunkts für die Zusammenschaltungsvorrichtung basierend auf der Zusammenschaltungs-Medienverbindungsanforderungsnachricht; und
Übertragen, durch das Netzelement der einheitlichen Medienfunktion, von Mediendaten zwischen der ersten Endgerätevorrichtung und der Zusammenschaltungsvorrichtung unter Verwendung des ersten Medienendpunkts und des Zusammenschaltungs-Medienendpunkts, oder Übertragen, durch das Netzelement der einheitlichen Medienfunktion, von Mediendaten zwischen der zweiten Endgerätevorrichtung und der Zusammenschaltungsvorrichtung unter Verwendung des zweiten Medienendpunkts und des Zusammenschaltungs-Medienendpunkts.

4. Verfahren nach Anspruch 1, wobei das Verfahren ferner Folgendes umfasst:
Empfangen, durch das Netzelement der einheitlichen Medienfunktion, einer Medienumleitungs-Anzeigenachricht von einem Anwendungsserver, wobei die Medienumleitungs-Anzeigenachricht zum Anfordern der Erzeugung eines Medienumleitungs-Endpunkts für eine Ressource oder Vorrichtung verwendet wird, die durch die Medienumleitungs-Anzeigenachricht angezeigt wird;
Erzeugen, durch das Netzelement der einheitlichen Medienfunktion, des Medienumleitungs-Endpunkts für die Medienumleitungs-Anzeigenachricht basierend auf der Medienumleitungs-Anzeigenachricht; und
Übertragen, durch das Netzelement der einheitlichen Medienfunktion unter Verwendung des ersten Medienendpunkts und des Medienumleitungs-Endpunkts, von Mediendaten zwischen der ersten Endgerätevorrichtung und der Ressource oder Vorrichtung, die durch die Medienumleitungs-Anzeigenachricht angezeigt wird, und/oder Übertragen, durch das Netzelement der einheitlichen Medienfunktion unter Verwendung des zweiten Medienendpunkts und des Medienumleitungs-Endpunkts, von Mediendaten zwischen der zweiten Endgerätevorrichtung und der Ressource oder Vorrichtung, die durch die Medienumleitungs-Anzeigenachricht angezeigt wird.

5. Verfahren nach Anspruch 4, wobei die durch die Medienumleitungs-Anzeigenachricht angezeigte Ressource eine Ansageressource ist.

6. Verfahren nach Anspruch 4, wobei das Erzeugen, durch das Netzelement der einheitlichen Medienfunktion, des Medienumleitungs-Endpunkts für die Medienumleitungs-Anzeigenachricht basierend auf der Medienumleitungs-Anzeigenachricht umfasst:
Erzeugen, durch das Netzelement der einheitlichen Medienfunktion, eines dritten Medienendpunkts für eine dritte Endgerätevorrichtung basierend auf der Medienumleitungs-Anzeigenachricht.

7. Verfahren nach Anspruch 4, wobei das Verfahren ferner Folgendes umfasst:
wenn der erste Medienendpunkt mit dem Medienumleitungs-Endpunkt assoziiert ist, Ändern, durch das Netzelement der einheitlichen Medienfunktion, einer Assoziation zwischen dem ersten Medienendpunkt und dem zweiten Medienendpunkt in eine Assoziation zwischen dem ersten Medienendpunkt und dem Medienumleitungs-Endpunkt; oder
wenn der zweite Medienendpunkt mit dem Medienumleitungs-Endpunkt assoziiert ist, Ändern, durch das Netzelement der einheitlichen Medienfunktion, einer Assoziation zwischen dem zweiten Medienendpunkt und dem ersten Medienendpunkt in eine Assoziation zwischen dem zweiten Medienendpunkt und dem Medienumleitungs-Endpunkt.

8. Anrufverarbeitungsverfahren, umfassend:
Senden, durch ein erstes Netzelement einer Zugangsmediensteuerung, einer ersten Medienverbindungsanforderungsnachricht an ein Netzelement einer einheitlichen Medienfunktion, wobei die erste Medienverbindungsanforderungsnachricht zum Anfordern der Erzeugung eines ersten Medienendpunkts für eine erste Endgerätevorrichtung in dem Netzelement der einheitlichen Medienfunktion verwendet wird; und
Empfangen, durch das erste Netzelement der Zugangsmediensteuerung, einer ersten Medienverbindungsantwort von dem Netzelement der einheitlichen Medienfunktion, wobei die erste Medienverbindungsantwort eine Ressourcenkennung des ersten Medienendpunkts umfasst.

9. Verfahren nach Anspruch 8, wobei das Verfahren ferner Folgendes umfasst:
Senden, durch das erste Netzelement der Zugangsmediensteuerung, einer Sitzungsanforderungsnachricht an ein zweites Netzelement einer Zugangsmediensteuerung, wobei die Sitzungsanforderungsnachricht die Ressourcenkennung und Medieninformationen des ersten Medienendpunkts umfasst; und
Empfangen, durch das erste Netzelement der Zugangsmediensteuerung, einer Sitzungsantwortnachricht von dem zweiten Netzelement der Zugangsmediensteuerung, wobei die Sitzungsantwortnachricht eine Ressourcenkennung und Medieninformationen eines zweiten Medienendpunkts umfasst, der für eine zweite Endgerätevorrichtung erzeugt wurde.

10. Verfahren nach Anspruch 8 oder 9, wobei das Verfahren ferner Folgendes umfasst:
wenn das Netzelement der einheitlichen Medienfunktion einen Medienumleitungs-Endpunkt für eine Medienumleitungs-Anzeigenachricht erzeugt, Senden, durch das erste Netzelement der Zugangsmediensteuerung, einer ersten Medienaktualisierungs-Anzeigenachricht an das Netzelement der einheitlichen Medienfunktion, wobei die erste Medienaktualisierungs-Anzeigenachricht das Netzelement der einheitlichen Medienfunktion anweist, eine Assoziation zwischen dem ersten Medienendpunkt und dem zweiten Medienendpunkt in eine Assoziation zwischen dem ersten Medienendpunkt und dem Medienumleitungs-Endpunkt zu ändern.

11. Anrufverarbeitungsvorrichtung (2000, 2100), die konfiguriert ist, um das Verfahren nach einem der Ansprüche 1 bis 10 zu implementieren.

12. Computerlesbares Speichermedium, umfassend Anweisungen, wobei, wenn die Anweisungen auf einem Computer ausgeführt werden, der Computer in die Lage versetzt wird, das Verfahren nach einem der Ansprüche 1 bis 10 durchzuführen.

13. Anrufverarbeitungsverfahren, umfassend:
Senden, durch ein erstes Netzelement einer Zugangsmediensteuerung, einer ersten Medienverbindungsanforderungsnachricht an ein Netzelement einer einheitlichen Medienfunktion, wobei die erste Medienverbindungsanforderungsnachricht zum Anfordern der Erzeugung eines ersten Medienendpunkts für eine erste Endgerätevorrichtung in dem Netzelement der einheitlichen Medienfunktion verwendet wird;
Erzeugen (902), durch das Netzelement der einheitlichen Medienfunktion, des ersten Medienendpunkts für die erste Endgerätevorrichtung basierend auf der ersten Medienverbindungsanforderungsnachricht;
Senden, durch das Netzelement der einheitlichen Medienfunktion, einer ersten Medienverbindungsantwort an das erste Netzelement der Zugangsmediensteuerung, wobei die erste Medienverbindungsantwort eine Ressourcenkennung des ersten Medienendpunkts umfasst;
Senden, durch ein zweites Netzelement einer Zugangsmediensteuerung, einer zweiten Medienverbindungsanforderungsnachricht an das Netzelement der einheitlichen Medienfunktion, wobei die zweite Medienverbindungsanforderungsnachricht zum Anfordern der Erzeugung eines zweiten Medienendpunkts für eine zweite Endgerätevorrichtung in dem Netzelement der einheitlichen Medienfunktion verwendet wird;
Erzeugen (904), durch das Netzelement der einheitlichen Medienfunktion, des zweiten Medienendpunkts für die zweite Endgerätevorrichtung basierend auf der zweiten Medienverbindungsanforderungsnachricht;
Senden, durch das Netzelement der einheitlichen Medienfunktion, einer zweiten Medienverbindungsantwort an das zweite Netzelement der Zugangsmediensteuerung, wobei die zweite Medienverbindungsantwort eine Ressourcenkennung des zweiten Medienendpunkts umfasst; und
Übertragen (905), durch das Netzelement der einheitlichen Medienfunktion, von Mediendaten zwischen der ersten Endgerätevorrichtung und der zweiten Endgerätevorrichtung unter Verwendung des ersten Medienendpunkts und des zweiten Medienendpunkts.

14. Verfahren nach Anspruch 13, wobei das Verfahren ferner Folgendes umfasst:
Empfangen (1201), durch das Netzelement der einheitlichen Medienfunktion, einer Zusammenschaltungs-Medienverbindungsanforderungsnachricht von einem Netzelement einer Zusammenschaltungs-Grenzwertsteuerungsfunktion, wobei die Zusammenschaltungs-Medienverbindungsanforderungsnachricht zum Anfordern der Erzeugung eines Zusammenschaltungs-Medienendpunkts für eine Zusammenschaltungsvorrichtung verwendet wird;
Erzeugen (1202), durch das Netzelement der einheitlichen Medienfunktion, des Zusammenschaltungs-Medienendpunkts für die Zusammenschaltungsvorrichtung basierend auf der Zusammenschaltungs-Medienverbindungsanforderungsnachricht; und
Übertragen (1203), durch das Netzelement der einheitlichen Medienfunktion, von Mediendaten zwischen der ersten Endgerätevorrichtung und der Zusammenschaltungsvorrichtung unter Verwendung des ersten Medienendpunkts und des Zusammenschaltungs-Medienendpunkts, oder Übertragen, durch das Netzelement der einheitlichen Medienfunktion, von Mediendaten zwischen der zweiten Endgerätevorrichtung und der Zusammenschaltungsvorrichtung unter Verwendung des zweiten Medienendpunkts und des Zusammenschaltungs-Medienendpunkts.

## Revendications

1. Procédé de traitement des appels, comprenant :
la réception (901), par un élément de réseau de fonction multimédia unifié, d'un premier message de demande de connexion multimédia provenant d'un premier élément de réseau de commande d'accès multimédia, dans lequel le premier message de demande de connexion multimédia est utilisé pour demander la création d'un premier point de terminaison multimédia pour un premier dispositif terminal dans l'élément de réseau de fonction multimédia unifié ;
la création (902), par l'élément de réseau de fonction multimédia unifié, du premier point de terminaison multimédia pour le premier dispositif terminal sur la base du premier message de demande de connexion multimédia ;
l'envoi, par l'élément de réseau de fonction multimédia unifié, d'une première réponse de connexion multimédia au premier élément de réseau de commande d'accès multimédia, dans lequel la première réponse de connexion multimédia comprend un identifiant de ressource du premier point de terminaison multimédia ;
la réception (903), par l'élément de réseau de fonction multimédia unifié, d'un second message de demande de connexion multimédia provenant d'un second élément de réseau de commande d'accès multimédia, dans lequel le second message de demande de connexion multimédia est utilisé pour demander la création d'un deuxième point de terminaison multimédia pour un deuxième dispositif terminal dans l'élément de réseau de fonction multimédia unifié ;
la création (904), par l'élément de réseau de fonction multimédia unifié, du deuxième point de terminaison multimédia pour le deuxième dispositif terminal sur la base du second message de demande de connexion multimédia ;
l'envoi, par l'élément de réseau de fonction multimédia unifié, d'une seconde réponse de connexion multimédia au second élément de réseau de commande d'accès multimédia, dans lequel la seconde réponse de connexion multimédia comprend un identifiant de ressource du deuxième point de terminaison multimédia ; et
la transmission (905), par l'élément de réseau de fonction multimédia unifié, des données multimédia entre le premier dispositif terminal et le deuxième dispositif terminal à l'aide du premier point de terminaison multimédia et du deuxième point de terminaison multimédia.

2. Procédé selon la revendication 1, dans lequel le procédé comprend également :
l'association, par l'élément de réseau de fonction multimédia unifié, du premier point de terminaison multimédia au deuxième point de terminaison multimédia.

3. Procédé selon la revendication 1, dans lequel le procédé comprend également :
la réception, par l'élément de réseau de fonction multimédia unifié, d'un message de demande de connexion multimédia d'interconnexion provenant d'un élément de réseau de fonction de commande de frontière d'interconnexion, dans lequel le message de demande de connexion multimédia d'interconnexion est utilisé pour demander la création d'un point de terminaison multimédia d'interconnexion pour un dispositif d'interconnexion ;
la création, par l'élément de réseau de fonction multimédia unifié, du point de terminaison multimédia d'interconnexion pour le dispositif d'interconnexion sur la base du message de demande de connexion multimédia d'interconnexion ; et
la transmission, par l'élément de réseau de fonction multimédia unifié, des données multimédia entre le premier dispositif terminal et le dispositif d'interconnexion à l'aide du premier point de terminaison multimédia et du point de terminaison multimédia d'interconnexion, ou la transmission, par l'élément de réseau de fonction multimédia unifié, des données multimédia entre le deuxième dispositif terminal et le dispositif d'interconnexion à l'aide du deuxième point de terminaison multimédia et du point de terminaison multimédia d'interconnexion.

4. Procédé selon la revendication 1, dans lequel le procédé comprend également :
la réception, par l'élément de réseau de fonction multimédia unifié, d'un message d'indication de redirection multimédia provenant d'un serveur d'application, dans lequel le message d'indication de redirection multimédia est utilisé pour demander la création d'un point de terminaison de redirection multimédia pour une ressource ou un dispositif indiqué par le message d'indication de redirection multimédia ;
la création, par l'élément de réseau de fonction multimédia unifié, du point de terminaison de redirection multimédia pour le message d'indication de redirection multimédia sur la base du message d'indication de redirection multimédia ; et
la transmission, par l'élément de réseau de fonction multimédia unifié à l'aide du premier point de terminaison multimédia et du point de terminaison de redirection multimédia, des données multimédia entre le premier dispositif terminal et la ressource ou le dispositif indiqué par le message d'indication de redirection multimédia, et/ou la transmission, par l'élément de réseau de fonction multimédia unifié à l'aide du deuxième point de terminaison multimédia et du point de terminaison de redirection multimédia, des données multimédia entre le deuxième dispositif terminal et la ressource ou le dispositif indiqué par le message d'indication de redirection multimédia.

5. Procédé selon la revendication 4, dans lequel la ressource indiquée par le message d'indication de redirection multimédia est une ressource d'annonce.

6. Procédé selon la revendication 4, dans lequel la création, par l'élément de réseau de fonction multimédia unifié, du point de terminaison de redirection multimédia pour le message d'indication de redirection multimédia, sur la base du message d'indication de redirection multimédia, comprend :
la création, par l'élément de réseau de fonction multimédia unifié, d'un troisième point de terminaison multimédia pour un troisième dispositif terminal sur la base du message d'indication de redirection multimédia.

7. Procédé selon la revendication 4, dans lequel le procédé comprend également :
lorsque le premier point de terminaison multimédia est associé au point de terminaison de redirection multimédia, le changement, par l'élément de réseau de fonction multimédia unifié, d'une association entre le premier point de terminaison multimédia et le deuxième point de terminaison multimédia en une association entre le premier point de terminaison multimédia et le point de terminaison de redirection multimédia ; ou
lorsque le deuxième point de terminaison multimédia est associé au point de terminaison de redirection multimédia, le changement, par l'élément de réseau de fonction multimédia unifié, d'une association entre le deuxième point de terminaison multimédia et le premier point de terminaison multimédia en une association entre le deuxième point de terminaison multimédia et le point de terminaison de redirection multimédia.

8. Procédé de traitement des appels, comprenant :
l'envoi, par un premier élément de réseau de commande d'accès multimédia, d'un premier message de demande de connexion multimédia à un élément de réseau de fonction multimédia unifié, dans lequel le premier message de demande de connexion multimédia est utilisé pour demander la création d'un premier point de terminaison multimédia pour un premier dispositif terminal dans l'élément de réseau de fonction multimédia unifié ; et
la réception, par le premier élément de réseau de commande d'accès multimédia, d'une première réponse de connexion multimédia à partir de l'élément de réseau de fonction multimédia unifié, dans lequel la première réponse de connexion multimédia comprend un identifiant de ressource du premier point de terminaison multimédia.

9. Procédé selon la revendication 8, dans lequel le procédé comprend également :
l'envoi, par le premier élément de réseau de commande d'accès multimédia, d'un message de demande de session à un second élément de réseau de commande d'accès multimédia, dans lequel le message de demande de session comprend l'identifiant de ressource et les informations multimédia du premier point de terminaison multimédia ; et
la réception, par le premier élément de réseau de commande d'accès multimédia, d'un message de réponse de session provenant du second élément de réseau de commande d'accès multimédia, dans lequel le message de réponse de session comprend un identifiant de ressource et des informations multimédia d'un deuxième point de terminaison multimédia créé pour un deuxième dispositif terminal.

10. Procédé selon la revendication 8 ou 9, dans lequel le procédé comprend également :
lorsque l'élément de réseau de fonction multimédia unifié crée un point de terminaison de redirection multimédia pour un message d'indication de redirection multimédia, l'envoi, par le premier élément de réseau de commande d'accès multimédia, d'un premier message d'indication de mise à jour multimédia à l'élément de réseau de fonction multimédia unifié, dans lequel le premier message d'indication de mise à jour multimédia indique à l'élément de réseau de fonction multimédia unifié de changer une association entre le premier point de terminaison multimédia et le deuxième point de terminaison multimédia en une association entre le premier point de terminaison multimédia et le point de terminaison de redirection multimédia.

11. Appareil de traitement des appels (2000, 2100), configuré pour mettre en œuvre le procédé selon l'une quelconque des revendications 1 à 10.

12. Support de stockage lisible par ordinateur, comprenant des instructions, dans lequel, lorsque les instructions sont exécutées sur un ordinateur, l'ordinateur est activé pour réaliser le procédé selon l'une quelconque des revendications 1 à 10.

13. Procédé de traitement des appels, comprenant :
l'envoi, par un premier élément de réseau de commande d'accès multimédia, d'un premier message de demande de connexion multimédia à un élément de réseau de fonction multimédia unifié, dans lequel le premier message de demande de connexion multimédia est utilisé pour demander la création d'un premier point de terminaison multimédia pour un premier dispositif terminal dans l'élément de réseau de fonction multimédia unifié ;
la création (902), par l'élément de réseau de fonction multimédia unifié, du premier point de terminaison multimédia pour le premier dispositif terminal sur la base du premier message de demande de connexion multimédia ;
l'envoi, par l'élément de réseau de fonction multimédia unifié, d'une première réponse de connexion multimédia au premier élément de réseau de commande d'accès multimédia, dans lequel la première réponse de connexion multimédia comprend un identifiant de ressource du premier point de terminaison multimédia ;
l'envoi, par un second élément de réseau de commande d'accès multimédia, d'un second message de demande de connexion multimédia à l'élément de réseau de fonction multimédia unifié, dans lequel le second message de demande de connexion multimédia est utilisé pour demander la création d'un deuxième point de terminaison multimédia pour un deuxième dispositif terminal dans l'élément de réseau de fonction multimédia unifié ;
la création (904), par l'élément de réseau de fonction multimédia unifié, du deuxième point de terminaison multimédia pour le deuxième dispositif terminal sur la base du second message de demande de connexion multimédia ;
l'envoi, par l'élément de réseau de fonction multimédia unifié, d'une seconde réponse de connexion multimédia au second élément de réseau de commande d'accès multimédia, dans lequel la seconde réponse de connexion multimédia comprend un identifiant de ressource du deuxième point de terminaison multimédia ; et
la transmission (905), par l'élément de réseau de fonction multimédia unifié, des données multimédia entre le premier dispositif terminal et le deuxième dispositif terminal à l'aide du premier point de terminaison multimédia et du deuxième point de terminaison multimédia.

14. Procédé selon la revendication 13, dans lequel le procédé comprend également :
la réception (1201), par l'élément de réseau de fonction multimédia unifié, d'un message de demande de connexion multimédia d'interconnexion provenant d'un élément de réseau de fonction de commande de frontière d'interconnexion, dans lequel le message de demande de connexion multimédia d'interconnexion est utilisé pour demander la création d'un point de terminaison multimédia d'interconnexion pour un dispositif d'interconnexion ;
la création (1202), par l'élément de réseau de fonction multimédia unifié, du point de terminaison multimédia d'interconnexion pour le dispositif d'interconnexion sur la base du message de demande de connexion multimédia d'interconnexion ; et
la transmission (1203), par l'élément de réseau de fonction multimédia unifié, des données multimédia entre le premier dispositif terminal et le dispositif d'interconnexion à l'aide du premier point de terminaison multimédia et du point de terminaison multimédia d'interconnexion, ou la transmission, par l'élément de réseau de fonction multimédia unifié, des données multimédia entre le deuxième dispositif terminal et le dispositif d'interconnexion à l'aide du deuxième point de terminaison multimédia et du point de terminaison multimédia d'interconnexion.
